(19) Europäisches Patentamt
European Patent Office
Office européen des brevets

(11) **EP 4 769 319 A1**

(12) **EUROPEAN PATENT APPLICATION**
published in accordance with Art. 153(4) EPC

(43) Date of publication:
**01.07.2026 Bulletin 2026/27**

(21) Application number: **24864268.8**

(22) Date of filing: **17.07.2024**

(51) International Patent Classification (IPC):
**G06T 17/00** (2006.01)   **G06T 15/00** (2011.01)

(52) Cooperative Patent Classification (CPC):
**G06T 9/001; G06T 5/60; G06T 5/70; G06T 17/00;
G06T 17/20; G06T 19/20;** G06T 2200/04;
G06T 2207/20081; G06T 2207/20084;
G06T 2207/30244

(86) International application number:
**PCT/CN2024/105958**

(87) International publication number:
**WO 2025/055544 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023 CN 202311205626**

(71) Applicant: **Tencent Technology (Shenzhen)
Company Limited
Shenzhen, Guangdong 518057 (CN)**

(72) Inventors:
• **YANG, Jiayu**
  **Shenzhen, Guangdong 518057 (CN)**
• **CHENG, Ziang**
  **Shenzhen, Guangdong 518057 (CN)**
• **DUAN, Yunfei**
  **Shenzhen, Guangdong 518057 (CN)**
• **LI, Hongdong**
  **Shenzhen, Guangdong 518057 (CN)**
• **JI, Pan**
  **Shenzhen, Guangdong 518057 (CN)**

(74) Representative: **Nederlandsch Octrooibureau
P.O. Box 29720
2502 LS The Hague (NL)**

(54) **THREE-DIMENSIONAL MODEL GENERATION METHOD AND APPARATUS, DEVICE, STORAGE MEDIUM, AND PROGRAM PRODUCT**

(57)    A three-dimensional model generation method and apparatus, a device, a storage medium, and a program product, relating to the technical field of computers. The method comprises: acquiring a noise addition feature representation (210); when denoising the noise addition feature representation by means of denoising network layers respectively corresponding to a plurality of viewing angles, determining input feature representations of the denoising network layers respectively corresponding to the plurality of viewing angles (220); acquiring three-dimensional shared information shared among three-dimensional conversion matrices respectively corresponding to the plurality of input feature representations (230); on the basis of the three-dimensional shared information, adjusting the plurality of input feature representations (240); and on the basis of a plurality of adjusted feature representations, respectively generating viewing angle images at the plurality of viewing angles (250).

FIG. 2

**Description**

RELATED APPLICATION

This application claims the priority to Chinese Patent Application No. 202311205626.1 filed on September 15, 2023 and entitled "Method and apparatus for generating three-dimensional model, device, storage medium, and program product".

FIELD OF THE TECHNOLOGY

Embodiments of the present disclosure relate to the field of computer technologies, and particularly relate to a method and apparatus for generating a three-dimensional model, a device, a storage medium, and a program product.

BACKGROUND OF THE DISCLOSURE

Multi-vision learning, also referred to as multi-view learning, focuses on how to model and explore two-dimensional images collected for entities to obtain three-dimensional models that can better show solid shapes of the entities.

In the related art, a diffusion model is generally used as a generation model when a three-dimensional model is obtained based on two-dimensional image modeling. After an image collected for an entity is obtained, the image is transformed into an abstract description of the entity through a vision-language model. Then, the abstract description is used as a generation condition when camera parameters corresponding to the image and other viewing angles are analyzed through the generation model. Thus, the diffusion model can generate a three-dimensional model at a viewing angle 360° under the restriction of the generation condition.

In the method, the generation condition in a process of generating the three-dimensional model is merely the abstract description for the image, such that geometric consistency of the generated three-dimensional model cannot be ensured. For example, with a picture of an automobile as input, an abstract description generated through the vision-language model includes a style, a color and an appearance of the automobile. However, the generated multi-view images generally only satisfy the abstract description, which cannot ensure that the multi-view images represent the same automobile.

SUMMARY

Embodiments of the present disclosure provide a method and apparatus for generating a three-dimensional model, a device, a storage medium, and a program product. The technical solution is as follows.

One aspect provides a method for generating a three-dimensional model. The method is performed by a computer device. The method includes:

obtaining a noise feature representation corresponding to noise data, the noise feature representation being configured for being denoised at a plurality of viewing angles, to obtain the images of the entity element respectively corresponding to the plurality of viewing angles;

determining input feature representations of denoising network layers corresponding to the plurality of viewing angles when the denoising network layers corresponding to the plurality of viewing angles denoise the noise feature representation, the input feature representations being feature representations input into the denoising network layers;

obtaining three-dimensional common information shared by three-dimensional transformation matrices corresponding to the plurality of input feature representations, the three-dimensional transformation matrices being matrices obtained through dimension transformation of the input feature representations;

adjusting the plurality of input feature representations based on the three-dimensional common information, and obtaining a plurality of adjusted feature representations, a correspondence existing between the plurality of input feature representations and the plurality of adjusted feature representations; and

generating the images of the entity element respectively corresponding to the plurality of viewing angles based on the plurality of adjusted feature representations, the plurality of images being configured for being integrated to generate the three-dimensional model representing the entity element.

Another aspect provides an apparatus for generating a three-dimensional model. The apparatus includes:

an obtainment module, configured to obtain a noise feature representation corresponding to noise data, the noise feature representation being configured for being denoised at a plurality of viewing angles, to obtain corresponding images of an entity element at the plurality of viewing angles;

a determination module, configured to determine input feature representations of denoising network layers corresponding to the plurality of viewing angles when the denoising network layers corresponding to the plurality of viewing angles denoise the noise feature representation, the input feature representations being feature representations input into the denoising network layers;

an extraction module, configured to obtain three-dimensional common information shared by three-dimensional transformation matrices corresponding to the plurality of input feature representations, the three-dimensional transformation matrices being matrices obtained through dimension transformation of the input feature representations;

an adjustment module, configured to adjust the plurality of input feature representations based on the three-dimensional common information, and obtain a plurality of adjusted feature representations, a correspondence existing between the plurality of input feature representations and the plurality of adjusted feature representations; and

a generation module, configured to generate the corresponding images of the entity element at the plurality of viewing angles based on the plurality of adjusted feature representations, the plurality of images being configured for being integrated to generate the three-dimensional model representing the entity element.

Yet another aspect provides a computer device. The computer device includes a processor and a memory. The memory stores at least one instruction, at least one segment of program, and a code set or an instruction set. The at least one instruction, the at least one segment of program, and the code set or instruction set are loaded and executed by the processor to implement the method for generating a three-dimensional model according to any one of the embodiments of the present disclosure.

Yet another aspect provides a computer-readable storage medium. The computer-readable storage medium stores at least one instruction, at least one segment of program, and a code set or an instruction set. The at least one instruction, the at least one segment of program, and the code set or instruction set are loaded and executed by a processor to implement the method for generating a three-dimensional model according to any one of the embodiments of the present disclosure.

Still another aspect provides a computer program product or a computer program. The computer program product or computer program includes computer instructions. The computer instructions are stored in a computer-readable storage medium. A processor of a computer device reads the computer instructions from the computer-readable storage medium. The processor executes the computer instructions, such that the computer device is caused to perform the method for generating a three-dimensional model according to any one of the embodiments.

The technical solutions provided by the embodiments of the present disclosure have at least the following beneficial effects:

Through overall analysis of the plurality of input feature representations, the same information of the plurality of input feature representations on a three-dimensional scale can be obtained, such that the three-dimensional common information can be extracted. Representation of the input feature representations is constrained through the three-dimensional common information, such that separation caused by independent denoising at different viewing angles through the corresponding denoising network layers is avoided. The input feature representations are adjusted through the three-dimensional common information, which is conducive to improvement in correlation between different viewing angles in a denoising process, such that a strong correlation exists between the images. In this way, the plurality of images are favorably integrated to generate the three-dimensional model having higher geometric consistency, and authenticity and details of representing the entity element through the three-dimensional model are improved.

BRIEF DESCRIPTION OF THE DRAWINGS

FIG. 1 is a schematic diagram of an implementation environment according to one exemplary embodiment of the present disclosure;

FIG. 2 is a flowchart of a method for generating a three-dimensional model according to one exemplary embodiment of the present disclosure;

FIG. 3 is a flowchart of a method for generating a three-dimensional model according to another exemplary embodiment of the present disclosure;

FIG. 4 is a flowchart of a method for generating a three-dimensional model according to yet another exemplary embodiment of the present disclosure;

FIG. 5 is a flowchart of a method for generating a three-dimensional model according to still another exemplary embodiment of the present disclosure;

FIG. 6 is a schematic diagram of a denoising process through noise reduction self-encoders corresponding to two viewing angles according to one exemplary embodiment of the present disclosure;

FIG. 7 is a schematic diagram of an internal structure of a pooling layer of an attention mechanism according to one exemplary embodiment of the present disclosure;

FIG. 8 is a schematic diagram of a noise reduction self-encoder invoked circularly by a conventional diffusion model according to one exemplary embodiment of the present disclosure;

FIG. 9 is a schematic diagram of a comparison between a generation result of a method for generating a three-dimensional model according to one exemplary embodiment of the present disclosure and generation results of other methods;

FIG. 10 is a schematic diagram of a comparison between a generation result of a method for generating a three-dimensional model according to another exemplary embodiment of the present disclosure and generation results of other methods;

FIG. 11 is a structural block diagram of an apparatus for generating a three-dimensional model according to one exemplary embodiment of the present disclosure; and

FIG. 12 is a structural block diagram of a server according to one exemplary embodiment of the present disclosure.

## DESCRIPTION OF EMBODIMENTS

Embodiments of the present disclosure introduce a method for generating a three-dimensional model. According to the method for generating a three-dimensional model, a denoising process is performed on the noise feature representation at a plurality of viewing angles respectively, and three-dimensional common information between input feature representations is extracted in the denoising process. Thus, representation of the input feature representations can be constrained through the three-dimensional common information, and a correlation between different viewing angles in the denoising process can be strengthened. In this way, a strong correlation exists between images, and the plurality of images are favorably integrated to generate the three-dimensional model having higher geometric consistency. The method for generating a three-dimensional model may be applied to various modeling scenes of the three-dimensional model, such as a game modeling field, a medical field (for example, for modeling medical research objects), a movie field, a scientific field (for example, for modeling an accurate model of compounds), a building field, and a geological field, which are not limited by the embodiments of the present disclosure.

Information (including, but not limited to, user device information, personal user information, etc.), data (including, but not limited to, data for analysis, data for storage, data for display, etc.) and signals involved in the present disclosure are permitted by a user or fully permitted by all parties. Collection, use and processing of relevant data need to comply with relevant laws, regulations and standards of relevant regions. For example, noise data, denoising network layers and other contents involved in the present disclosure are obtained under full authorization.

In addition, a system for generating a three-dimensional model in the embodiments of the present disclosure is described. The method for generating a three-dimensional model according to the embodiments of the present disclosure may be independently performed by a terminal, may be performed by a server, or may be performed through data interaction between a terminal and a server, which is not limited by the embodiments of the present disclosure. In one embodiment, illustration is provided with a case where a terminal and a server interact to perform the method for generating a three-dimensional model as an example.

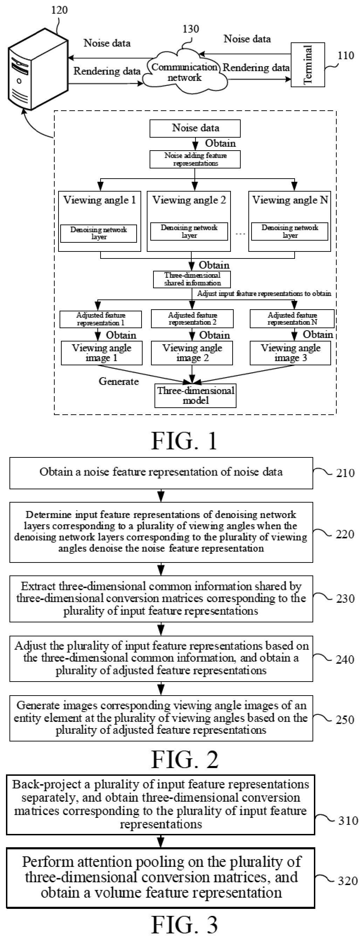

Illustratively, with reference to FIG. 1, the system for generating a three-dimensional model involves a terminal 110 and a server 120. The terminal 110 is connected to the server 120 through a communication network 130.

In some embodiments, the terminal 110 has a noise generation function or a noise obtaining function, so as to obtain noise data.

In one embodiment, the terminal 110 sends the noise data to the server 120 through the communication network 130. The server 120 is capable of obtaining a noise feature representation based on the noise data. The noise feature representation is denoised at a plurality of viewing angles respectively, to obtain corresponding images of an entity element at the plurality of viewing angles.

Illustratively, the plurality of viewing angles are different preselected viewing angles. The noise feature representation is denoised separately at each of the viewing angles.

In some embodiments, the server 120 determines the input feature representations of the denoising network layers corresponding to the plurality of viewing angles when the denoising network layers corresponding to the plurality of viewing angles denoise the noise feature representation. The input feature representations are feature representations that are to be input into the denoising network layers for denoising.

Illustratively, each of the viewing angles corresponds to at least one of the denoising network layers, and a correspondence exists between the denoising network layers corresponding to all the viewing angles. For example, a correspondence exists between the first denoising network layer corresponding to a viewing angle A and the first denoising network layer corresponding to a viewing angle B. When the server 120 denoises the noise feature representation at the plurality of viewing angles separately, the noise feature representation is decoded through at least one of the denoising network layers corresponding to the plurality of viewing angles. For any one of the denoising network layers corresponding to the plurality of viewing angles, the feature representations input into the denoising network layer are determined as the input feature representations.

In some embodiments, the server 120 extracts the three-dimensional common information shared by three-dimensional transformation matrices corresponding to the plurality of input feature representations.

The three-dimensional transformation matrices are obtained through dimension transformation of the input feature representations.

Illustratively, for any one of the denoising network layers, a one-to-one correspondence exists in at least one of denoising network layers corresponding to the plurality of viewing angles. Thus, the input feature representations in the corresponding denoising network layers at the plurality of viewing angles can be determined. That is, the input feature representations corresponding to the plurality of viewing angles can be determined.

In one embodiment, in order to analyze three-dimensional information of a three-dimensional entity element based on a plurality of two-dimensional input feature representations, the plurality of input feature representations are subjected to dimension transformation separately, such that the three-dimensional transformation matrices corresponding to the plurality of input feature representations are obtained. Further, the plurality of three-dimensional transformation matrices are analyzed, to extract the three-dimensional common information shared by the three-dimensional transformation matrices. That is, the three-dimensional common information is capable of representing element information contents expressed after the plurality of two-dimensional input feature representations are converted into three-dimensional features.

In some embodiments, the server 120 adjusts the plurality of input feature representations based on the three-dimensional common information, and obtains a plurality of adjusted feature representations.

A correspondence exists between the plurality of input feature representations and the plurality of adjusted feature representations.

Illustratively, the three-dimensional common information is capable of presenting a correlation between the plurality of input feature representations on a three-dimensional scale, such that a decoding process of the noise feature representation at the plurality of viewing angles through the three-dimensional common information can be constrained. The plurality of input feature representations are adjusted based on the three-dimensional common information, such that the plurality of adjusted feature representations are obtained. The plurality of adjusted feature representations have higher geometric consistency on the three-dimensional scale.

In some embodiments, the server 120 generates the corresponding images of the entity element at the plurality of viewing angles based on the plurality of adjusted feature representations.

The plurality of images are integrated to generate the three-dimensional model representing the entity element.

Illustratively, the server 120 obtains the image at the corresponding viewing angle based on each of the adjusted feature representations. The image is an image obtained by predicting the entity element at the viewing angle. In one embodiment, the plurality of images may be integrated to generate the three-dimensional model representing the entity element.

In some embodiments, the server 120 sends rendering data configured for rendering and displaying the three-dimensional model to the terminal 110 through the communication network 130. In one embodiment, the terminal 110 renders and displays the three-dimensional model based on the rendering data.

The terminal includes, but is not limited to, a mobile terminal such as a mobile phone, a tablet computer, a portable laptop computer, an intelligent voice interaction device, a smart home appliance, or an in-vehicle terminal, or may be implemented as a desktop computer, etc. The server may be an independent physical server, a server cluster or a distributed system composed of a plurality of physical servers, or a cloud server.

In some embodiments, the server may be implemented as a node in a blockchain system.

With reference to the above term introduction and application scenes, a method for generating a three-dimensional model according to the present disclosure is described. Application of the method to a server is used as an example. As shown in FIG. 2, the method includes the following operation 210 to operation 250.

Operation 210: Obtain a noise feature representation corresponding to noise data.

Illustratively, the noise data is data configured for representing noise. In one embodiment, the noise data is randomly selected noise.

The noise feature representation is a feature representation configured for representing data information of the noise data. In one embodiment, one or more noise feature representation are obtained through sampling from a pre-obtained Gaussian distribution based on the noise data. Illustratively, the noise data is a pre-provided Gaussian noise image. Feature extraction is performed on the Gaussian noise image to obtain the noise feature representations.

The noise feature representations are configured for being denoised at a plurality of viewing angles, to obtain corresponding images of an entity element at the plurality of viewing angles.

Illustratively, the entity element is a three-dimensional solid element, and is an element synthesized through the three-dimensional model. For example, the entity element is an object element existing in a real world, such as a building, a tree, or a book. Or, the entity element is an object element synthesized in a virtual world, such as a virtual person or a virtual building. Illustratively, the plurality of viewing angles are different viewing angles, and the viewing angles are configured for representing observation angles used when the entity element is observed.

In one embodiment, the plurality of viewing angles are pre-selected. For example, the plurality of viewing angles include a front viewing angle configured for presenting a front view of the entity element, a side viewing angle configured for presenting a side view of the entity element, a top viewing angle configured for presenting a top view of the entity element, etc. Illustratively, the plurality of viewing angles may be represented in forms of different spatial angles respectively.

In some embodiments, the plurality of viewing angles each correspond to one denoising model. The denoising model is a model obtained after training is performed based on the viewing angle. Illustratively, for a denoising model 1 corresponding to a viewing angle A, the denoising model 1 is a model obtained after a plurality of sample images collected based on the viewing angle A are trained.

When the noise feature representations are denoised at the plurality of viewing angles respectively, the noise feature representations are input into the denoising models corresponding to the plurality of viewing angles, and each of the denoising models may denoise the noise feature representation based on the corresponding viewing angle. Thus, the image generated after predicted observation is performed on the entity element at the viewing angle is obtained and represented.

For example, the noise feature representation is input into the denoising model 1 corresponding to the viewing angle A, the noise feature representation is denoised through the denoising model 1, and a image a when the entity element is observed at the viewing angle A is predicted and obtained. In addition, the noise feature representation is input into a denoising model 2 corresponding to a viewing angle B, the noise feature representation is denoised through the denoising model 2, and a image b when the entity element is observed at the viewing angle B is predicted and obtained.

Operation 220: Determine input feature representations of denoising network layers corresponding to the plurality of viewing angles when the denoising network layers corresponding to the plurality of viewing angles denoise the noise feature representations.

In one embodiment, for any one of the plurality of viewing angles, the viewing angle corresponds to at least one of the denoising network layers, and the denoising network layer is a network layer configured to perform a denoising process. Illustratively, the denoising models corresponding to the plurality of viewing angles each include at least one denoising network layer. After the noise feature representation is input into the denoising model corresponding to each of the viewing angles, the denoising process is performed on the noise feature representation through the at least one denoising network layer.

Illustratively, the plurality of viewing angles correspond to the plurality of denoising network layers, and a correspondence exists between the plurality of denoising network layers corresponding to the plurality of viewing angles. For example, the denoising models corresponding to the plurality of viewing angles have the same model structure. The correspondence exists between the plurality of denoising network layers corresponding to all the viewing angles. For example, a correspondence exists between the first denoising network layer corresponding to the viewing angle A and the first denoising network layer corresponding to the viewing angle B.

In one embodiment, at least one denoising network layer respectively corresponding to multiple viewing angles is the denoising network layer trained based on the viewing angle. Thus, although the plurality of denoising network layers having the correspondence at different viewing angles have the same network layer structure, the plurality of denoising network layers have different network layer parameters.

Illustratively, a correspondence exists between the first denoising network layer at the viewing angle A and the second denoising network layer at the viewing angle B. A network layer parameter of the first denoising network layer at the viewing angle A is denoted by a parameter β, and a network layer parameter of the first denoising network layer at the viewing angle B is denoted by a parameter θ. The parameter β is different from the parameter θ.

The input feature representations are feature representations input into the denoising network layers.

Illustratively, when performing denoising based on the noise feature representations, the denoising network layers further adjust feature dimensions of the noise feature representations. For any one of the denoising network layers, a feature representation that is to be input into the denoising network layer is firstly determined as the input feature representation. Compared with the noise feature representation, the input feature representation has a change of noise reduction after pre-denoising, a change in feature dimension, or other changes.

In one exemplary embodiment, the denoising network layers include decoding network layers. When the denoising network layers corresponding to the plurality of viewing angles denoise the noise feature representations, the decoding network layers corresponding to the plurality of viewing angles decode the noise feature representations, and data, that is to be input into the decoding network layers for decoding, corresponding to the plurality of viewing angles is determined as the input feature representations.

Illustratively, each of the viewing angles corresponds to a plurality of decoding network layers. For any one of the plurality of viewing angles, the input feature representation that is to be input into each of the decoding network layers for decoding is determined. That is, the input feature representations corresponding to the plurality of decoding network layers are determined based on one viewing angle.

In some embodiments, each of the viewing angles corresponds to at least one denoising network layer. A correspondence exists in at least one of denoising network layers corresponding to the plurality of viewing angles. For any one of the denoising network layers, the input feature representations corresponding to the plurality of viewing angles on the denoising network layers at the same level are determined. Thus, the plurality of input feature representations corresponding to the denoising network layers at the level are determined based on the denoising network layers and the plurality of viewing angles having the correspondence.

Illustratively, with the denoising network layers as the decoding network layers as an example. A viewing angle 1 corresponds to two decoding network layers, and a viewing angle 2 corresponds to two decoding network layers. A correspondence exists between the first decoding network layer corresponding to the viewing angle 1 and the first decoding network layer corresponding to the viewing angle 2. A correspondence exists between the second decoding network layer corresponding to the viewing angle 1 and the second decoding network layer corresponding to the viewing angle 2. Thus, for the first decoding network layer, input feature representations corresponding to the plurality of viewing angles (the viewing angle 1 and the viewing angle 2) are determined, and the plurality of input feature representations corresponding to the first decoding network layer are obtained. Similarly, for the second decoding network layer, input feature representations corresponding to the plurality of viewing angles (the viewing angle 1 and the viewing angle 2) are determined, and the plurality of input feature representations corresponding to the second decoding network layer are obtained.

Operation 230: Extract three-dimensional common information shared by three-dimensional transformation matrices corresponding to the plurality of input feature representations.

A correspondence exists in at least one of the denoising network layers corresponding to the plurality of viewing angles. During extraction of the three-dimensional common information, any one of at least one of the denoising network layers is analyzed, and the plurality of input feature representations are determined based on the denoising network layers at the same level at the plurality of viewing angles.

For example, a correspondence exists between the first denoising network layer corresponding to the viewing angle A and the first denoising network layer corresponding to the viewing angle B. An input feature representation 1 that is to be input into the first denoising network layer corresponding to the viewing angle A is determined, and an input feature representation 2 that is to be input into the first denoising network layer corresponding to the viewing angle B is determined. The input feature representation 1 and the input feature representation 2 are used as the plurality of input feature representations corresponding to the first denoising network layer.

Illustratively, the input feature representations are feature representations obtained through denoising and/or feature scale transformation based on two-dimensional noise feature representations. Thus, the input feature representations are two-dimensional feature representations.

In some embodiments, in order to study the input feature representations on a three-dimensional scale, after the input feature representations corresponding to the plurality of denoising network layers having the correspondence are obtained, dimension transformation is performed on the plurality of input feature representations separately. Thus, the three-dimensional transformation matrices corresponding to the plurality of input feature representations are obtained. That is, the plurality of three-dimensional transformation matrices are obtained. The three-dimensional transformation matrices are three-dimensional feature representations. The plurality of three-dimensional transformation matrices are in one-to-one correspondence with the plurality of input feature representations.

That is, the three-dimensional transformation matrices are obtained through dimension transformation of the input feature representations.

In some embodiments, after the plurality of three-dimensional transformation matrices are obtained, the plurality of three-dimensional transformation matrices are analyzed to extract the three-dimensional common information shared by the plurality of three-dimensional transformation matrices.

In one embodiment, the plurality of three-dimensional transformation matrices are analyzed through a pooling layer having an attention mechanism, such that the three-dimensional common information shared by the plurality of three-dimensional transformation matrices is extracted.

Illustratively, the three-dimensional common information is configured for representing a shared association relationship between the plurality of input feature representations on the three-dimensional scale. For example, through the three-dimensional common information, geometric consistency of the plurality of three-dimensional transformation matrices representing the plurality of input feature representations can be known, and further various attribute information such as a shape, a structure, and a color of the entity element can be known. For example, the three-dimensional common information expresses the fact that a gap exists in a corner of the entity element; or a central position of the entity element has different colors.

In one embodiment, through the three-dimensional common information, denoising processes performed at different viewing angles can be constrained. The situation that the denoising network layers corresponding to different viewing angles denoise the noise feature representations independently only based on a previous training process is avoided, and an analytical correlation between the plurality of viewing angles for the same noise feature representation is influenced. That is, through the three-dimensional common information representing shared information, an analytical correlation between the denoising network layers having the correspondence at the plurality of viewing angles can be improved.

Illustratively, the three-dimensional common information is information obtained based on the plurality of input feature representations of the plurality of denoising network layers having the correspondence, so a correspondence exists between the three-dimensional common information and the denoising network layers. When the plurality of denoising network layers exist for each of the viewing angles, the three-dimensional common information corresponding to the plurality of denoising network layers at one of the viewing angles can be extracted from the plurality of viewing angles.

For example, based on the plurality of input feature representations of the first denoising network layer corresponding to the plurality of viewing angles, three-dimensional common information 1 is extracted. The three-dimensional common information 1 corresponds to the first denoising network layer. If the plurality of denoising network layers exist at each of the viewing angles, three-dimensional common information 2 is further extracted based on the second denoising network layers corresponding to the plurality of viewing angles. The three-dimensional common information 2 corresponds to the second denoising network layers.

In some embodiments, the denoising network layers at the same level share the same or the same group of three-dimensional common information.

The above descriptions are merely illustrative examples, and are not limited by the embodiments of the present disclosure.

Operation 240: Adjust the plurality of input feature representations based on the three-dimensional common information, and obtain a plurality of adjusted feature representations.

Illustratively, the three-dimensional common information is the shared information extracted based on the plurality of input feature representations, and can comprehensively present the same content and/or similar content between the plurality of input feature representations.

In some embodiments, after the three-dimensional common information corresponding to the plurality of input feature representations is obtained, the plurality of input feature representations are adjusted based on the three-dimensional common information. Thus, the adjusted feature representations corresponding to the plurality of input feature representations are obtained. That is, the plurality of adjusted feature representations are obtained. That is, a correspondence exists between the plurality of input feature representations and the plurality of adjusted feature representations. Illustratively, the input feature representation 1 of the first denoising network layer at the viewing angle A is adjusted through the three-dimensional common information, such that an adjusted feature representation 1' corresponding to the input feature representation 1 is obtained. In addition, the input feature representation 2 of the first denoising network layer at the viewing angle B is adjusted through the three-dimensional common information, such that an adjusted feature representation 2' corresponding to the input feature representation 2 is obtained.

Operation 250: Generate the corresponding images of the entity element at the plurality of viewing angles based on the plurality of adjusted feature representations.

Illustratively, after the plurality of adjusted feature representations corresponding to the plurality of input feature representations are obtained, the adjusted feature representations are input into the denoising network layers corresponding to the input feature representations. Thus, the denoising network layers perform feature size transformation and/or denoising on the adjusted feature representations including the three-dimensional common information, and a problem of lack of correlation when independent analysis is performed through the denoising network layers corresponding to different viewing angles is prevented.

For example, with analysis of the first denoising network layers corresponding to the plurality of viewing angles as an example, the three-dimensional common information is obtained by synthesizing the input feature representation 1 of the first denoising network layer corresponding to the viewing angle A and the input feature representation 2 of the first denoising network layer corresponding to the viewing angle B. The input feature representation 1 is adjusted through the three-dimensional common information, and the adjusted feature representation 1' corresponding to the input feature representation 1 is obtained. The input feature representation 2 is adjusted through the three-dimensional common information, and the adjusted feature representation 2' corresponding to the input feature representation 2 is obtained.

The adjusted feature representation 1' is input into the first denoising network layer corresponding to the viewing angle A, such that the first denoising network layer corresponding to the viewing angle A can process the adjusted feature representation 1' including the three-dimensional common information. Similarly, the adjusted feature representation 2' is input into the first denoising network layer corresponding to the viewing angle A, such that the first denoising network layer corresponding to the viewing angle B can process the adjusted feature representation 2' including the three-dimensional common information.

In one embodiment, when the denoising network layers are implemented as the decoding network layers, the adjusted feature representation 1' is input into the first decoding network layer corresponding to the viewing angle A, such that the first decoding network layer corresponding to the viewing angle A can decode the adjusted feature representation 1' including the three-dimensional common information. For example, feature size transformation is performed on the adjusted feature representation 1'. Similarly, the adjusted feature representation 2' is input into the first decoding network layer corresponding to the viewing angle B, such that the first decoding network layer corresponding to the viewing angle B can decode the adjusted feature representation 2' including the three-dimensional common information. For example, feature size transformation is performed on the adjusted feature representation 2'.

In one exemplary embodiment, after the denoising network layer corresponding to each of the viewing angles denoises the adjusted feature representation, the denoising feature representation corresponding to each of the viewing angles is obtained.

The denoising feature representations are feature representations obtained after the noise feature representations are denoised.

In one embodiment, each of the viewing angles corresponds to the plurality of denoising network layers. For any one of the viewing angles, a last denoising network layer at the viewing angle denoises a last adjusted feature representation, such that the denoising feature representation corresponding to the viewing angle is obtained.

For example, a last denoising network layer corresponding to the viewing angle A denoises a last adjusted feature representation o, such that a denoising feature representation o' corresponding to the viewing angle A is obtained. Similarly, a last denoising network layer corresponding to the viewing angle B denoises a last adjusted feature representation p, such that a denoising feature representation p' corresponding to the viewing angle B is obtained.

In one exemplary embodiment, decoders process the plurality of denoising feature representations respectively, such that the images corresponding to the plurality of denoising feature representations are obtained, and the plurality of images are obtained.

Illustratively, the plurality of denoising feature representations are decoded through the decoders respectively, such that the images are restored according to the denoising feature representations. The plurality of denoising feature representations are in one-to-one correspondence with the plurality of viewing angles, and the restored images are image contents predicted during observation of the entity element at the corresponding viewing angles.

For example, the viewing angle A corresponds to the denoising feature representation o', and the decoder decodes the denoising feature representation o', such that the image a corresponding to the viewing angle A is restored. The image a is an image content predicted during observation of the entity element at the corresponding viewing angle A. Similarly, the viewing angle B corresponds to the denoising feature representation p', and the decoder decodes the denoising feature representation p', such that the image b corresponding to the viewing angle B is restored. The image b is an image content predicted during observation of the entity element at the corresponding viewing angle B.

In one embodiment, the plurality of viewing angles each correspond to one encoder, and the encoder of the corresponding viewing angle encodes the denoising feature representation corresponding to the viewing angle. Or, the plurality of viewing angles correspond to one encoder, and the encoder encodes the denoising feature representation corresponding to each of the viewing angles. This is not limited herein.

The plurality of images are integrated to generate the three-dimensional model representing the entity element.

Illustratively, the plurality of images are image contents presenting the entity element at different viewing angles. After the plurality of images are obtained, the plurality of images are processed through a preset program, such that the plurality of images are integrated to generate the three-dimensional model representing the entity element. The three-dimensional model can present the entity element at the plurality of viewing angles, and attribute information such as a shape and a structure of the three-dimensional model conforms to the plurality of images.

In some embodiments, in order to make the three-dimensional model closer to a real entity element, more viewing angles are selected to perform the above process. For example, three or more viewing angles are selected to perform the denoising process, such that the entity element can be described in a more accurate and detailed manner, and the more real three-dimensional model can be obtained.

The above descriptions are merely illustrative examples, and are not limited by the embodiments of the present disclosure.

In conclusion, through overall analysis of the plurality of input feature representations, the same information of the plurality of input feature representations on the three-dimensional scale can be obtained, such that the three-dimensional common information can be extracted. Representation of the input feature representations is constrained through the three-dimensional common information, such that separation caused by independent denoising at different viewing angles through the corresponding denoising network layers is avoided. The input feature representations are adjusted through the three-dimensional common information, which is conducive to improvement in correlation between different viewing angles in a denoising process, such that a strong correlation exists between the images. In this way, the plurality of images are favorably integrated to generate the three-dimensional model having higher geometric consistency, and authenticity and details of representing the entity element through the three-dimensional model are improved.

In one exemplary embodiment, when the three-dimensional common information is extracted, the three-dimensional transformation matrices corresponding to the plurality of input feature representations are obtained, and then the plurality of three-dimensional transformation matrices are analyzed through the pooling layer having the attention mechanism, such that the three-dimensional common information representing shared structure information is extracted. Illustratively, as shown in FIG. 3, operation 230 shown in FIG. 2 may be implemented as the following operation 310 to operation 320.

Operation 310: Back-project the plurality of input feature representations separately, and obtain the three-dimensional transformation matrices corresponding to the plurality of input feature representations.

Illustratively, the input feature representations are feature representations on a two-dimensional scale. For example, the input feature representations are features represented in a form of a two-dimensional matrix.

In one embodiment, after the plurality of input feature representations are obtained, in order to adjust the input feature representations on the two-dimensional scale to the three-dimensional scale representing space information, the plurality of input feature representations are back-projected separately.

Back-projection is to obtain one three-dimensional object space based on two-dimensional image reconstruction, and map the input feature representations to the three-dimensional object space based on the object space. In this way, back-projecting the input feature representations represents reconstructing two-dimensional input feature representations to obtain one three-dimensional transformation matrix.

In one exemplary embodiment, the plurality of input feature representations are back-projected separately, and projection feature representations corresponding to the plurality of viewing angles are obtained.

In one embodiment, the input feature representations are back-projected through a pre-selected back projection function.

Illustratively, the plurality of input feature representations are back-projected separately through the back projection function, such that each of the input feature representations is converted into a projection feature representation on the three-dimensional scale. That is, the projection feature representations are configured for representing feature information of the input feature representations on the three-dimensional scale, and are information configured for expressing the input feature representations on a space dimension.

When the plurality of denoising network layers having the correspondence are processed, the plurality of obtained input feature representations are in one-to-one correspondence with the plurality of viewing angles. Thus, after the input feature representations are back-projected, the plurality of obtained projection feature representations are in one-to-one correspondence with the plurality of viewing angles.

In one embodiment, in addition to converting the input feature representations into the projection feature representations on the three-dimensional scale, in order to highlight influence on the projection feature representations at different viewing angles, parameter feature representations corresponding to the plurality of viewing angles are further obtained. The parameter feature representations are feature representations obtained based on camera parameters corresponding to the viewing angles, and are configured for representing the space information at the viewing angles.

A correspondence exists between the plurality of parameter feature representations and the plurality of projection feature representations.

In some embodiments, the camera parameters corresponding to the plurality of viewing angles are obtained.

Illustratively, the viewing angles correspond to cameras. Determination of the viewing angles is influenced by positions of the cameras and photographing directions of the cameras. The cameras are configured to represent abstract expressions during capture of the entity element. Based on selection of the plurality of viewing angles, the camera parameters represented by the cameras corresponding to the plurality of viewing angles can be determined.

Based on a correspondence between the plurality of viewing angles and the camera parameters, a relative positional condition between the cameras and the predicted entity element is represented through the camera parameters.

In one embodiment, the camera parameters include camera positions and camera directions. The camera positions represent the positions of the cameras. The camera directions represent directions of the cameras. For example, the camera positions represent the positions of the cameras relative to the entity element in a world coordinate system, and the camera directions represent the photographing directions of the cameras relative to the entity element in the world coordinate system.

The cameras expressed herein are configured for representing the abstract expressions of the viewing angles. Relative position conditions between the cameras and the entity element are referred to as the camera parameters. The camera parameters are pre-determined known parameters. However, the images obtained based on the cameras/viewing angles are not pre-obtained, and the image contents predicted based on information such as the camera parameters are pre-obtained. That is, an objective of determining the camera parameters is to perform a prediction and analysis process according to the corresponding viewing angles, so as to generate the images at the corresponding viewing angles based on the viewing angles corresponding to the camera positions of the cameras.

In some embodiments, volume expression is performed on the plurality of camera parameters, and parameter volume expressions corresponding to the plurality of camera parameters are obtained.

Illustratively, the parameter volume expressions are feature representations obtained by expressing the camera parameters in a three-dimensional space.

Corresponding viewing angle collection rules of the images during generation of the images are expressed by obtaining the camera parameters. Thus, based on the viewing angle collection rules corresponding to the camera parameters, firstly, the camera parameters are converted to be expressed in the three-dimensional space to obtain the parameter volume expressions. In this way, the parameter volume expressions are encoded based on an encoding function to obtain the parameter feature representations. Based on this, the three-dimensional transformation matrices of the input feature representations are obtained, such that generation efficiency and accuracy of the three-dimensional transformation matrices are improved.

In one embodiment, in the three-dimensional space in which the input feature representations are back-projected, a plurality of voxels in the three-dimensional space are determined.

A voxel is an abbreviation of a volume pixel, and is a combination of a pixel, a volume, and an element, which is equivalent to a pixel in a 3-dimension (3D) space.

Illustratively, the plurality of voxels are implemented as all voxels forming the three-dimensional space. Or, the plurality of voxels are implemented as some voxels in the three-dimensional space.

In one embodiment, the three-dimensional space projected through back projection is a space including a large quantity of voxels. When volume expression is performed on the plurality of camera parameters, the camera corresponding to each of the camera parameters and the three-dimensional space projected during back projection are determined, and the parameter volume expressions corresponding to the camera parameters are obtained by combining the cameras and the plurality of voxels in the three-dimensional space.

Illustratively, with analysis of a camera parameter Q in the plurality of camera parameters as an example, a camera corresponding to the camera parameter Q is a camera C, a corresponding viewing angle is the viewing angle A, the viewing angle A corresponds to the input feature representation 1, and a three-dimensional space projected by the input feature representation 1 is a three-dimensional space S. A plurality of voxels (such as a voxel s1 and a voxel s2) in the three-dimensional space S are determined, such that the camera C and the plurality of voxels in the three-dimensional space S are combined to obtain a parameter volume expression corresponding to the camera parameter Q.

In one embodiment, relative positional conditions between the cameras and the plurality of voxels are determined, such that viewing angle directions and viewing angle depths corresponding to the plurality of voxels are obtained. The viewing angle direction and the viewing angle depth corresponding to each of the voxels are recorded in the voxel, and the plurality of voxels are combined to obtain the parameter volume expressions corresponding to the camera parameters.

The viewing angle directions are contents determined based on directions of the voxels relative to camera centers. The viewing angle depths are contents determined based on distances between the voxels and the camera centers.

Illustratively, each of the voxels is connected to the camera center of the corresponding camera, and a direction of a connecting line is recorded as the viewing angle direction. A projection length of the connecting line in a main optical axis direction of the camera is recorded as the viewing angle depth.

For example, with analysis of the camera parameter Q in the plurality of camera parameters as an example, the camera corresponding to the camera parameter Q is the camera C, and the corresponding three-dimensional space is the three-dimensional space S. The three-dimensional space includes the plurality of voxels such as the voxel s1 and the voxel s2. For the voxel s1, a viewing angle direction of the voxel s1 relative to a camera center c of the camera C is determined, and a viewing angle depth of the voxel s1 relative to the camera center c of the camera C is determined. In addition, a viewing angle direction of the voxel s2 relative to the camera center c of the camera C is further determined, and a viewing angle depth of the voxel s2 relative to the camera center c of the camera C is further determined. Further, the recorded viewing angle directions and viewing angle depths of the plurality of voxels are combined to obtain the parameter volume expression corresponding to the camera parameter.

In one embodiment, the parameter volume expressions corresponding to the plurality of camera parameters are determined through the above process.

In some embodiments, the parameter volume expressions are encoded through a preset feature encoding function, and the parameter feature representations corresponding to the plurality of viewing angles are obtained.

The preset feature encoding function is configured for normalizing the parameter volume expressions, so as to obtain the plurality of parameter feature representations for the parameter volume expressions corresponding to the plurality of viewing angles. The plurality of parameter feature representations are in one-to-one correspondence with the plurality of parameter volume expressions.

In one exemplary embodiment, the projection feature representation and the parameter feature representation at the same viewing angle are concatenated based on the correspondence, and the three-dimensional transformation matrices corresponding to the plurality of input feature representations are obtained.

Illustratively, after the plurality of parameter feature representations and the plurality of projection feature representations are obtained, the plurality of parameter feature representations are in one-to-one correspondence with the plurality of viewing angles, and the plurality of projection feature representations are in one-to-one correspondence with the plurality of viewing angles. Thus, a one-to-one correspondence between the plurality of parameter feature representations and the plurality of projection feature representations is determined. Based on the correspondence, feature concatenation is performed on the projection feature representation and the parameter feature representation corresponding to the same viewing angle, and the three-dimensional transformation matrix corresponding to each of the viewing angles is obtained. That is, the three-dimensional transformation matrices corresponding to the plurality of input feature representations are obtained.

In some embodiments, a position point represented by each of the viewing angles is referred to as a viewpoint. Illustration is provided with a generation task of the three-dimensional model through N viewpoints as an example.

Illustratively, for the generation task of N viewpoints, viewpoint labels are recorded as $i = 1, \cdots, N$.

In one embodiment, with implementing the denoising network layers as the decoding network layers as an example, N feature images (N input feature representations) are input.

Illustratively, an input feature representation of a viewpoint i is recorded as $m_i$. $m_i$ is back-projected, to obtain a three-dimensional transformation matrix $v^i$ obtained through back projection into the three-dimensional space, as shown in the following formula one.

$$\text{Formula one: } v^i = \prod_i^{-1}(m_i) \oplus PosEncode(v_{cam}^i)$$

In the formula, $\Pi^{-1}$ denotes the back projection function configured for converting the input feature representations on the two-dimensional scale into the three-dimensional projection feature representations; $\oplus$ denotes feature concatenation in a feature dimension; *PosEncode* denotes the preset feature encoding function; and $v_{cam}^i$ denotes the parameter volume expressions corresponding to the camera parameters, which include the viewing angle directions and the viewing angle depths.

Operation 320: Perform attention pooling on the plurality of three-dimensional transformation matrices, and obtain a volume feature representation.

In one embodiment, an attention pooling process is performed through the pooling layer having the attention mechanism. After the plurality of three-dimensional transformation matrices of the denoising network layers having the correspondence are obtained, in order to analyze the space information having a correlation and represented by the plurality of three-dimensional transformation matrices, attention pooling is performed on the plurality of three-dimensional transformation matrices, such that attention is paid to the three-dimensional common information shared by the plurality of three-dimensional transformation matrices.

The volume feature representation is configured for representing the three-dimensional common information shared by the plurality of three-dimensional transformation matrices.

In one exemplary embodiment, voxel sets represented by the plurality of three-dimensional transformation matrices are determined.

The three-dimensional transformation matrices are matrices obtained by comprehensively representing the projection feature representations and the parameter feature representations. Thus, the plurality of three-dimensional transformation matrices can represent feature information corresponding to the viewing angles respectively.

In one embodiment, when the voxel sets represented by the plurality of three-dimensional transformation matrices are determined, the three-dimensional space when the three-dimensional transformation matrices are obtained is determined, and the plurality of voxels that participate in determination of the parameter volume expressions in the three-dimensional space form the voxel sets. For example, all the voxels in the three-dimensional space are combined into the voxel sets.

Illustratively, the voxel sets are configured for representing sets of the plurality of voxels in the three-dimensional space when the three-dimensional transformation matrices are obtained.

In one exemplary embodiment, a plurality of attention values are determined based on a plurality of voxels at the same voxel positions in the plurality of voxel sets. Illustratively, attention is paid to the plurality of voxels at the same voxel positions in the plurality of voxel sets, and the plurality of attention values are obtained.

In one embodiment, each of three-dimensional transformation matrices corresponds to one voxel set, such that the plurality of voxel sets can be obtained. When the three-dimensional transformation matrices are obtained, position encoding is performed on the plurality of voxels in the three-dimensional space under the parameter volume expressions. Thus, the same voxel positions in the plurality of voxel sets can be quickly determined based on a position encoding process.

Illustratively, with any one of the voxel positions as an example, a voxel corresponding to the voxel position in each of the voxel sets is determined, such that the plurality of voxels are obtained. Attention is paid to the plurality of voxels in parallel, such that shared information of different voxels at the same voxel positions is extracted, and the shared information is represented by the attention values.

Similarly, the plurality of voxel positions are analyzed in the above mode, such that attention is paid to the plurality of voxels corresponding to the same voxel positions in parallel, the shared information corresponding to the plurality of voxel positions is extracted, and the attention values corresponding to the plurality of voxel positions are obtained.

In one exemplary embodiment, pooling is performed on the plurality of attention values, and the volume feature representation is obtained.

Illustratively, the plurality of attention values are combined to undergo pooling, such that the volume feature representation obtained by combining a plurality of pieces of shared information is obtained. The volume feature representation performs parallel analysis on the voxels corresponding to the same voxel position at the plurality of viewing angles based on the voxel position, and performs overall analysis based on the attention values corresponding to different voxel positions. Thus, the three-dimensional common information shared by the plurality of input feature representations can be presented in a more accurate and detailed manner.

In some embodiments, for the three-dimensional transformation matrix $v^i$ calculated through the formula one, through an attention pooling mechanism, three-dimensional transformation matrices $v^i$ of N viewpoints are unified into one volume feature representation $\bar{v}[x]$ , as shown in the following formula two.

$$\text{Formula two:} \quad \bar{v}[x] = Pool \circ Attention(\{v^i[x] \big| i = 1 \cdots N\})$$

In the formula, *Pool* is configured for representing pooling; o is configured for representing a Hadamard product, is a kind of calculation of matrices, and is configured for representing one-to-one multiplication between matrix elements; *Attention* is configured for representing attention processing through an attention layer; x is configured for representing voxels (or voxel blocks) in the three-dimensional transformation matrices; $v^i[x]$ is configured for representing a relationship between voxels corresponding to the same voxel position at different viewing angles, which may be regarded as the attention values; and $Attention(\{v^i[x]|i = 1\cdots N\})$ is configured for paying overall attention to the attention values corresponding to the plurality of voxel positions.

In conclusion, through overall analysis of the plurality of input feature representations, the same information of the plurality of input feature representations on the three-dimensional scale can be obtained, such that the three-dimensional common information can be extracted. Representation of the input feature representations is constrained through the three-dimensional common information, such that separation caused by independent denoising at different viewing angles through the corresponding denoising network layers is avoided. The input feature representations are adjusted through the three-dimensional common information, which is conducive to improvement in correlation between different viewing angles in a denoising process, such that a strong correlation exists between the images. In this way, the plurality of images are favorably integrated to generate the three-dimensional model having higher geometric consistency, and authenticity and details of representing the entity element through the three-dimensional model are improved.

In the embodiment of the present disclosure, a content of extracting the three-dimensional common information is described. Firstly, the input feature representations on the two-dimensional scale are back-projected, and the three-dimensional transformation matrices corresponding to the input feature representations are obtained. Then, attention pooling is performed on the three-dimensional transformation matrices, and the volume feature representation is obtained as a feature expression form of the three-dimensional common information. The two-dimensional scale is converted into the three-dimensional scale, such that more targeted analysis is favorably performed on geometric information represented by the input feature representations. Thus, the three-dimensional common information can be represented in a more detailed manner through the volume feature representation, and further analysis is favorably performed in a space dimension based on the volume feature representation. Further, a subsequent adjustment process is favorably performed based on the volume feature representation.

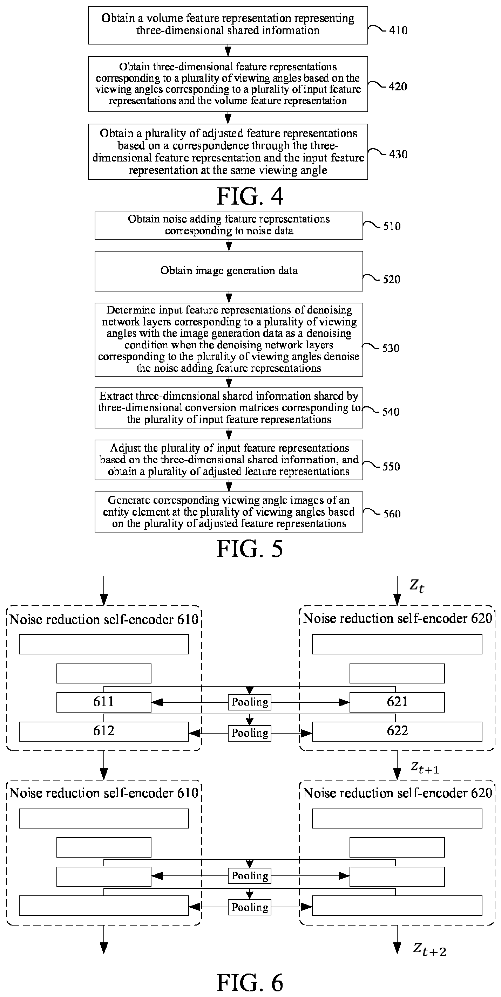

In one exemplary embodiment, when the input feature representations are adjusted through the three-dimensional common information, firstly, dimension transformation is performed based on the three-dimensional common information on the three-dimensional scale, so as to obtain residual feature representations on the two-dimensional scale. Then, feature concatenation is performed on the residual feature representations and the input feature representations together, such that the adjusted feature representations are obtained. Illustratively, as shown in FIG. 4, operation 240 shown in FIG. 2 may be implemented as the following operation 410 to operation 430.

Operation 410: Obtain the volume feature representation representing the three-dimensional common information.

Illustratively, dimension transformation is performed on the plurality of input feature representations to obtain the three-dimensional transformation matrices. The three-dimensional common information obtained through the plurality of three-dimensional transformation matrices is information represented on the three-dimensional scale. The three-dimensional common information on the three-dimensional scale may be represented through the volume feature representation.

Illustratively, the volume feature representation is a feature representation determined through the world coordinate system. The world coordinate system is a coordinate system established based on a selected origin, a horizontal axis, a longitudinal axis, and a vertical axis.

Operation 420: Obtain three-dimensional feature representations corresponding to the plurality of viewing angles based on the viewing angles corresponding to the plurality of input feature representations and the volume feature representation.

Illustratively, the volume feature representation is a feature representation jointly corresponding to the plurality of input feature representations. When the input feature representations are adjusted through the volume feature representation, the viewing angles corresponding to the plurality of input feature representations are considered. Thus, the three-dimensional feature representations including viewing angle information is obtained by combining the viewing angles and the volume feature representation.

The three-dimensional feature representations are configured for representing space dimension influence of the volume feature representation on the input feature representations. Further, an effect of the viewing angles when the volume feature representation adjusts the input feature representations can be presented sidewise.

A one-to-one correspondence exists between the plurality of three-dimensional feature representations and the plurality of viewing angles, and a one-to-one correspondence exists between the plurality of input feature representations and the plurality of viewing angles. That is, a correspondence exists between the plurality of three-dimensional feature representations and the plurality of input feature representations.

In one exemplary embodiment, camera coordinate systems corresponding to the plurality of viewing angles are determined.

The camera coordinate systems are coordinate systems established based on the cameras used during determination of the corresponding viewing angles as reference points. The camera coordinate systems are the coordinate systems established with the cameras used during determination of the viewing angles as the reference points.

Illustratively, the plurality of viewing angles are position information determined based on the camera positions and the camera directions of different cameras. Thus, each of the viewing angles corresponds to one of the cameras. The camera coordinate systems are coordinate systems determined with the cameras as the reference points and established based on an origin, a horizontal axis, a longitudinal axis, and a vertical axis. For example, with the camera center as the origin of the camera coordinate system, the horizontal axis, the vertical axis and the longitudinal axis are selected to create the camera coordinate system. Or, with any point on the camera as the origin, the horizontal axis, the vertical axis and the longitudinal axis are selected to create the camera coordinate system.

In one embodiment, if the plurality of viewing angles each correspond to one of the cameras and one camera coordinate system is established based on each of the cameras, the plurality of camera coordinate systems are created through the plurality of cameras, and the plurality of viewing angles each correspond to one of the camera coordinate systems.

In one exemplary embodiment, with reference to the camera coordinate systems corresponding to the viewing angle directions, three-dimensional coordinate mapping is performed on the volume feature representation, the volume feature representation is mapped to the three-dimensional space, and coordinate feature representations corresponding to the plurality of viewing angles are obtaining and represented.

In one embodiment, the volume feature representation is a feature representation on the three-dimensional scale presented through the three-dimensional space. The three-dimensional space is a space established based on the world coordinate system. The world coordinate system can map different feature representations to the same vector space.

Illustratively, with reference to the camera coordinate system corresponding to each of the viewing angles, three-dimensional coordinate mapping is performed on the volume feature representation, such that the volume feature representation presented in the world coordinate system is mapped to the camera coordinate system corresponding to each of the viewing angles, and the coordinate feature representations corresponding to the plurality of viewing angles are obtained.

The coordinate feature representations corresponding to different viewing angles are feature representations obtained with different cameras as reference points. Thus, the coordinate feature representations corresponding to the plurality of viewing angles may be different from each other.

For example, the viewing angle A corresponds to a camera coordinate system a, and the volume feature representation in the world coordinate system is mapped to the camera coordinate system a with reference to the camera coordinate system a, such that a three-dimensional coordinate mapping process of the volume feature representation is implemented, and a coordinate feature representation 1 corresponding to the viewing angle A is obtained. Similarly, the viewing angle B corresponds to a camera coordinate system b, and the volume feature representation in the world coordinate system is mapped to the camera coordinate system b with reference to the camera coordinate system b, such that a three-dimensional coordinate mapping process of the volume feature representation is implemented, and a coordinate feature representation 2 corresponding to the viewing angle B is obtained.

In some embodiments, the coordinate transformation process is performed through a preset three-dimensional coordinate transformation function. Illustratively, the volume feature representation in the world coordinate system is converted into the coordinate feature representations in the camera coordinate systems through trilinear interpolation.

In one exemplary embodiment, the three-dimensional feature representations corresponding to the plurality of viewing angles in the three-dimensional space are obtained based on the coordinate feature representations corresponding to the plurality of viewing angles.

Illustratively, after the coordinate feature representations corresponding to the plurality of viewing angles are obtained, at the same viewing angle, based on the viewing angle and the coordinate feature representation, the three-dimensional feature representation of the viewing angle in the three-dimensional space is obtained.

In some embodiments, the viewing angle depths represented by the plurality of viewing angles are obtained.

Illustratively, the viewing angle depths are the contents determined based on the distances between the voxels and the camera centers. The voxels are component elements in the three-dimensional space. Each of the voxels is connected to the camera center of the corresponding camera, and the projection length of the connecting line in the main optical axis direction of the camera is recorded as the viewing angle depth. Thus, each of the voxels corresponds to one viewing angle depth.

In one embodiment, the plurality of viewing angles correspond to the plurality of voxels, and each of the voxels corresponds to one of the viewing angle depths.

In some embodiments, the three-dimensional feature representations corresponding to the plurality of viewing angles in the three-dimensional space are obtained based on the viewing angle depth and the coordinate feature representation at the same viewing angle.

After the viewing angle depth is obtained, the viewing angle depth represents the distance between each of the voxels and the camera center, such that three-dimensional expression is performed on the voxel, and accuracy of three-dimensional transformation of the viewing angle directions is improved.

Illustratively, any one of the viewing angles is analyzed, and the coordinate feature representation corresponding to the viewing angle and the viewing angle depths corresponding to the plurality of voxels at the viewing angle are determined.

In one embodiment, the voxel sets represented by the three-dimensional transformation matrices corresponding to the plurality of viewing angles are determined.

Illustratively, the voxel sets include the plurality of voxels, and each of the voxels corresponds to one viewing angle depth.

In one embodiment, the plurality of voxel blocks in the voxel sets are filled separately with the viewing angle depths corresponding to the voxels as the voxel values, and voxel block sets having the voxel values are obtained.

Illustratively, with a voxel set S corresponding to the viewing angle A as an example, the voxel set S corresponding to the viewing angle A includes the voxel s1, the voxel s2, and other voxels, a viewing angle depth corresponding to the voxel s1 is used as a voxel value corresponding to the voxel s1, and a viewing angle depth corresponding to the voxel s2 is used as a voxel value corresponding to the voxel s2. Based on the filling process on the voxel sets, the plurality of voxel blocks having the voxel values are obtained. That is, the voxel block sets having the voxel values are obtained.

In some embodiments, the three-dimensional feature representations corresponding to the plurality of viewing angles in the three-dimensional space are obtained based on the voxel block sets and the coordinate feature representations.

Illustratively, the plurality of viewing angles each correspond to one voxel block set, such that the plurality of voxel block sets are obtained. The plurality of viewing angles each correspond to one coordinate feature representation, which means that the plurality of coordinate feature representations exist. Based on the voxel block set and the coordinate feature representation at the same viewing angle, the three-dimensional feature representation corresponding to the viewing angle is obtained, which means that the plurality of three-dimensional feature representations are obtained. The voxels in the voxel sets are filled with the viewing angle depths of the voxels as the voxel values, such that a three-dimensional information expression ability of the voxel block sets is improved, and a three-dimensional information expression ability of the three-dimensional feature representations is improved.

In some embodiments, position encoding is performed on the voxel block sets through a preset encoding function, and the voxel feature representations are obtained. The voxel block sets are encoded through the preset encoding function, and the voxel feature representations are obtained.

Illustratively, position encoding is performed on the voxel block sets having the voxel values through the preset encoding function, and position encoding results are referred to as the voxel feature representations.

In some embodiments, the voxel feature representation and the coordinate feature representation at the same viewing angle are concatenated, and the three-dimensional feature representations corresponding to the plurality of viewing angles in the three-dimensional space are obtained.

Illustratively, at the same viewing angle, feature concatenation is performed on the voxel feature representation and the coordinate feature representation, such that the three-dimensional feature representation at the viewing angle is obtained. Feature concatenation is performed on the voxel feature representations and the coordinate feature representations corresponding to the plurality of viewing angles, and the three-dimensional feature representations corresponding to the plurality of viewing angles are obtained. That is, the plurality of three-dimensional feature representations are obtained.

In some embodiments, for the volume feature representation $\bar{v}[x]$ calculated through the formula two, firstly, the volume feature representation $\bar{v}[x]$ is processed through coordinate mapping, and a difference is converted into the three-dimensional feature representation $\bar{v}_i$ in the camera coordinate system corresponding to each viewpoint, as shown in the following formula three:

$$\text{Formula three:} \quad \bar{v}_i = Warp_i(\bar{v}) \oplus PosEncode(d_{cam}^i)$$

In the formula, *Warp* denotes a three-dimensional coordinate transformation function, and is configured for converting the volume feature representation $\bar{v}[x]$ in the world coordinate system into a volume expression in the camera coordinate system (i.e., the coordinate feature representation); $\bar{v}$ denotes an abbreviation of the volume feature representation $\bar{v}[x]$; $\oplus$ denotes feature concatenation in the feature dimension; *PosEncode* denotes the preset encoding function; and $d_{cam}^i$ denotes the voxel feature representation determined based on a camera depth in the camera parameters.

Based on the camera coordinate system corresponding to each of the viewing angle directions, the coordinate feature representations corresponding to the plurality of viewing angles are determined. Thus, after the coordinate feature representations are converted into the three-dimensional space, the three-dimensional feature representation corresponding to each of the viewing angles is obtained, such that efficiency and accuracy of three-dimensional transformation of each of the viewing angles are improved.

Operation 430: Obtain the plurality of adjusted feature representations based on the correspondence through the three-dimensional feature representation and the input feature representation at the same viewing angle.

Illustratively, after it is determined that the corresponding three-dimensional feature representations are obtained through the camera coordinate systems corresponding to the plurality of viewing angles, the plurality of three-dimensional feature representations are obtained. Based on the correspondence between the plurality of three-dimensional feature representations and the plurality of viewing angles and the correspondence between the plurality of input feature representations and the plurality of viewing angles, the adjusted feature representations are obtained through the three-dimensional feature representation and the input feature representation at the same viewing angle.

In one embodiment, considering that the three-dimensional feature representations are the feature representations on the three-dimensional scale and the input feature representations are the feature representations on the two-dimensional scale, if the three-dimensional feature representations and the input feature representations need to be analyzed together, the three-dimensional feature representations need to be restored to the feature representations on the two-dimensional scale.

In some embodiments, the three-dimensional feature representations corresponding to the plurality of viewing angles are projected to a two-dimensional space, and the residual feature representations corresponding to the plurality of viewing angles are obtained.

Illustratively, contrary to the back projection, projection is used for projecting the three-dimensional feature representations to obtain the residual feature representations on the two-dimensional scale.

In one embodiment, in order to facilitate a subsequent feature processing process, a projection dimension used in the back projection is set to be the same as a projection dimension used in the projection. The three-dimensional feature representations corresponding to the plurality of viewing angles are projected at the same projection dimension, such that the feature representations projected to the two-dimensional space are referred to as the residual feature representations. That is, the residual feature representations corresponding to the plurality of viewing angles are obtained. The three-dimensional feature representations corresponding to the plurality of viewing angles are projected to the two-dimensional space, and then concatenated to the input feature representations, and the adjusted feature representations are obtained. Thus, the residual feature representations projected to the two-dimensional space and the input feature representations are feature representations having the same dimension, such that convenience of feature concatenation and subsequent calculation is improved.

In some embodiments, when the three-dimensional feature representations are projected in a projection manner, the content shown in the following formula four is used, and each of the three-dimensional feature representations is projected into the residual feature representation $\overline{m}_i[r]$ through the same ray attention pooling operation.

$$\text{Formula four:} \quad \overline{m}_i[r] = Pool \circ Attention(\{\overline{v}^i[r,d] \big| d = d_{near} \cdots d_{far}\})$$

In a back projection process, a pixel on the two-dimensional scale can be projected to generate one ray, such that a plurality of pixels on the two-dimensional scale can be projected to generate a plurality of rays, so as to form the three-dimensional space. Accordingly, in a projection process, each of the rays can be projected into the corresponding pixel on the two-dimensional scale.

$\overline{v}^i[r,d]$ is configured for representing projection of the three-dimensional feature representation $\overline{v}_i$ at the same projection dimension; r is configured for representing a pixel (i.e., a ray in the three-dimensional space) in the residual feature representation (which may be regarded as one image feature) on the two-dimensional scale; and d is configured for representing a depth of the ray. In a projection restoration process, d is sampled evenly from a near plane $d_{near}$ to a far plane $d_{far}$.

In one embodiment, through one multilayer perceptron (MLP), $\overline{m}_i[r]$ is converted into the residual feature representation having the same size as the input feature representation $m_i$.

In some embodiments, the residual feature representation and the input feature representation at the same viewing angle are concatenated, and the adjusted feature representations corresponding to the plurality of viewing angles are obtained.

Illustratively, the residual feature representations corresponding to the plurality of viewing angles are obtained. Based on the correspondence, determined based on the viewing angles, between the plurality of residual feature representations and the plurality of input feature representations, at the same viewing angle, feature concatenation is performed on the residual feature representation corresponding to the viewing angle and the input feature representation corresponding to the viewing angle, such that the adjusted feature representation corresponding to the viewing angle is obtained. The above process is performed based on the plurality of viewing angles, such that the adjusted feature representations corresponding to the plurality of viewing angles are obtained.

In one embodiment, feature concatenation is performed on the residual feature representation and the input feature representation at the same feature dimension, such that the adjusted feature representation is obtained.

In conclusion, in the embodiment of the present disclosure, a content of adjusting the input feature representations through the three-dimensional common information is described. The viewing angles and the volume feature representation are combined to obtain the three-dimensional feature representations. Further, the three-dimensional feature representations are projected to the two-dimensional space at the same viewing angle to obtain the residual feature representations corresponding to the plurality of viewing angles, and the input feature representations are adjusted through the residual feature representations. Thus, the adjusted feature representations include the three-dimensional common information represented by the residual feature representations and further correspond to the viewing angles. In this way, a more accurate denoising process based on the adjusted feature representations is facilitated, and the plurality of more detailed images having a correlation between the plurality of viewing angles are obtained favorably.

In one exemplary embodiment, in a process of denoising the noise feature representations, image generation data is obtained as a guiding condition of denoising. Illustratively, as shown in FIG. 5, the embodiment shown in FIG. 2 may be implemented as the following operation 510 to operation 560.

Operation 510: Obtain one or more noise feature representations corresponding to the noise data.

The noise feature representations are configured for being denoised at the plurality of viewing angles, to obtain the corresponding images of the entity element at the plurality of viewing angles.

Illustratively, the entity element is a three-dimensional solid element, and is an element synthesized through the three-dimensional model. The plurality of viewing angles are different viewing angles, and the viewing angles are configured for representing observation angles used when the entity element is observed.

Operation 520: Obtain the image generation data.

The image generation data is data collected for the entity element.

Illustratively, in a process of denoising the noise feature representations, the guiding condition needs to be set, to perform a targeted denoising process on the noise feature representations.

Illustratively, the image generation data is configured for generating the images representing the entity element. In one embodiment, the image generation data is configured for describing the entity element.

In one exemplary embodiment, at least one piece of image data collected for the entity element is obtained as the image generation data.

The image data is an image collected for the entity element at a preset viewing angle.

Illustratively, the preset viewing angle is a viewing angle that is preset, and is implemented as at least one viewing angle, such as the viewing angle A and a viewing angle K. An image collection process is performed on the entity element at the preset viewing angle, such that at least one piece of image data is collected.

In one embodiment, during image collection, the image data is collected through a camera corresponding to the preset viewing angle.

Illustratively, image data 1 is collected through a camera corresponding to a preset viewing angle A, and the image data 1 is used as the image generation data. Or, image data 1 is collected through a camera corresponding to a preset viewing angle A; and image data 2 is collected through a camera corresponding to a preset viewing angle B, and the image data 1 and the image data 2 are used as the image generation data. Or, image data 1 and image data 2 are collected through a camera corresponding to a preset viewing angle A, and the image data 1 and the image data 2 are used as the image generation data.

In some embodiments, the plurality of viewing angles configured for analyzing the noise feature representations may include the preset viewing angle or not, which is not limited by the embodiment of the present disclosure.

In one exemplary embodiment, text data configured for describing the entity element is obtained as the image generation data.

Illustratively, the text data is data obtained after the entity element is described, and is configured for presenting the entity element in a text form. For example, the text data is that a rabbit eats a carrot. Or, the text data is that a virtual warrior stands in a virtual scene.

Operation 530: Determine the input feature representations of the denoising network layers corresponding to the plurality of viewing angles with the image generation data as a denoising condition when the denoising network layers corresponding to the plurality of viewing angles denoise the noise feature representations.

Illustratively, the image generation data is used as the denoising condition, to guide an adjustment mode in a process of denoising the noise feature representations.

In one embodiment, the image generation data collected for the entity element is obtained as the guiding condition used in the denoising process. Thus, in the process of denoising the noise feature representations, the image generation data is used as reference information, and the denoising process is performed towards information represented by the image generation data.

Illustratively, the denoising condition is configured for determining a noise prediction situation when noise reduction is performed on the noise feature representations. When the noise feature representations are denoised, with the image generation data as the reference information, in order to reduce noise in the noise feature representations, the noise data that is to be subjected to denoising (noise reduction) in the noise feature representations is predicted.

In one embodiment, according to the noise data predicted through the image generation data, the feature representations obtained after removal of the noise data can be obtained in the process of denoising the noise feature representations through the denoising network layers. If there are the plurality of denoising network layers, the corresponding noise data can be obtained based on the plurality of denoising network layers, such that the denoising process can be performed based on the denoising data corresponding to each of the denoising network layers.

In some embodiments, the plurality of viewing angles each correspond to at least one denoising network layer, and a correspondence exists in the at least one denoising network layer at the plurality of viewing angles. Further, the input feature representations of the denoising network layers corresponding to the plurality of viewing angles are determined through the denoising network layers having the correspondence. The input feature representations are feature representations that are to be input into the denoising network layers for denoising.

Illustratively, the denoising network layers are implemented as the decoding network layers. When the decoding network layers corresponding to the plurality of viewing angles decode the noise feature representations, the input feature representations of the decoding network layers corresponding to the plurality of viewing angles are determined with the image generation data as the denoising condition.

In one exemplary embodiment, the plurality of viewing angles each correspond to m denoising network layers, and m is a positive integer.

Illustratively, m is a quantity of the denoising network layers corresponding to the plurality of viewing angles, and a correspondence exists between m denoising network layers corresponding to the plurality of viewing angles.

For example, the first denoising network layer at the viewing angle A corresponds to the first denoising network layer at the viewing angle B. An m-th denoising network layer at the viewing angle A corresponds to an m-th denoising network layer at the viewing angle B.

Illustratively, as shown in FIG. 6, illustration is provided with two of the plurality of viewing angles as an example. Each of the viewing angles corresponds to at least one noise reduction self-encoder (for ease of showing an iterative denoising process, each of the viewing angles is shown as corresponding to a series of noise reduction self-encoders). For example, the viewing angle A corresponds to a noise reduction self-encoder 610, and the viewing angle B corresponds to a noise reduction self-encoder 620. The noise reduction self-encoders are configured to perform the denoising process.

Each of the noise reduction self-encoders includes a plurality of denoising network layers, and the plurality of denoising network layers are configured to perform the denoising process and a feature size transformation process. Analysis through the decoding network layers in the denoising network layers is used as an example.

The plurality of denoising network layers correspond to each other. The decoding network layers are used as components of the denoising network layers, and the plurality of decoding network layers correspond to each other. As shown in FIG. 6, a correspondence exists between a decoding network layer 611 corresponding to the viewing angle A and a decoding network layer 621 corresponding to the viewing angle B, and a correspondence exists between a decoding network layer 612 corresponding to the viewing angle A and a decoding network layer 622 corresponding to the viewing angle B.

Operation 540: Extract the three-dimensional common information shared by the three-dimensional transformation matrices corresponding to the plurality of input feature representations.

Illustratively, each of the viewing angles corresponds to at least one denoising network layer, and a one-to-one correspondence exists in at least one of the denoising network layers corresponding to the plurality of viewing angles. During extraction of the three-dimensional common information, any one of at least one of the denoising network layers is analyzed, and based on the denoising network layers at the plurality of viewing angles, the plurality of input feature representations corresponding to the decoding network layers are determined.

Illustratively, the input feature representations are feature representations obtained through denoising and/or feature scale transformation based on two-dimensional noise feature representations. Thus, the input feature representations are two-dimensional feature representations.

In some embodiments, dimension transformation is performed on the plurality of input feature representations separately. Thus, the three-dimensional transformation matrices corresponding to the plurality of input feature representations are obtained. That is, the three-dimensional transformation matrices are obtained through dimension transformation of the input feature representations.

In some embodiments, after the plurality of three-dimensional transformation matrices are obtained, the plurality of three-dimensional transformation matrices are analyzed to extract the three-dimensional common information shared by the plurality of three-dimensional transformation matrices.

In one embodiment, the plurality of three-dimensional transformation matrices are analyzed through a pooling layer having an attention mechanism, such that the three-dimensional common information shared by the plurality of three-dimensional transformation matrices is extracted.

Illustratively, the three-dimensional common information is configured for representing a shared association relationship between the plurality of input feature representations on the three-dimensional scale.

In one exemplary embodiment, the plurality of viewing angles each correspond to one image generation model, and the plurality of image generation models have the same model structure.

Illustratively, the image generation models include the denoising network layers configured to perform denoising. In one embodiment, the denoising network layer includes at least one encoding network layer and at least one decoding network layer. The encoding network layers are in one-to-one correspondence with the decoding network layers, which are configured to perform opposite feature size transformation. The encoding network layers are configured to compress a feature size step by step, and the decoding network layers are configured to restore the feature size step by step.

In some embodiments, a one-to-one correspondence between the plurality of denoising network layers corresponding to the plurality of image generation models is determined. Illustratively, based on the denoising network layers having the correspondence at different viewing angles, the input feature representations input into the plurality of denoising network layers are determined.

In one embodiment, the image generation models corresponding to the plurality of viewing angles process the noise feature representations. When any one of the denoising network layers in the image generation models denoises the noise feature representations, the input feature representation corresponding to the corresponding viewing angle is determined, such that the plurality of input feature representations are obtained based on the plurality of viewing angles.

In some embodiments, the plurality of input feature representations are input into an attention pooling layer between the plurality of denoising network layers having the correspondence.

The attention pooling layer is a network layer configured to connect the plurality of denoising network layers having the correspondence in advance.

In some embodiments, the attention pooling layer extracts the three-dimensional common information shared by the three-dimensional transformation matrices corresponding to the plurality of input feature representations.

In one embodiment, the attention pooling layer is configured to back-project the plurality of input feature representations separately, and obtain the three-dimensional transformation matrices corresponding to the plurality of input feature representations. Attention pooling is performed on the plurality of three-dimensional transformation matrices, and the volume feature representation is obtained. The volume feature representation is configured for representing the three-dimensional common information shared by the plurality of three-dimensional transformation matrices.

Illustratively, as shown in FIG. 6, the correspondence exists between the decoding network layer 611 corresponding to the viewing angle A and the decoding network layer 621 corresponding to the viewing angle B, and the correspondence exists between the decoding network layer 612 corresponding to the viewing angle A and the decoding network layer 622 corresponding to the viewing angle B.

An input feature representation al that is to be input into the decoding network layer 611 is determined, and an input feature representation b1 that is to be input into the decoding network layer 621 is determined. The input feature representation al and the input feature representation b1 are input into an attention pooling layer corresponding to both the decoding network layer 611 and the decoding network layer 621, and three-dimensional common information 1 corresponding to both the decoding network layer 611 and the decoding network layer 621 is obtained.

Similarly, an input feature representation a2 that is to be input into the decoding network layer 612 is determined, and an input feature representation b2 that is to be input into the decoding network layer 622 is determined. The input feature representation a2 and the input feature representation b2 are input into an attention pooling layer corresponding to both the decoding network layer 612 and the decoding network layer 622, and three-dimensional common information 2 corresponding to both the decoding network layer 611 and the decoding network layer 622 is obtained.

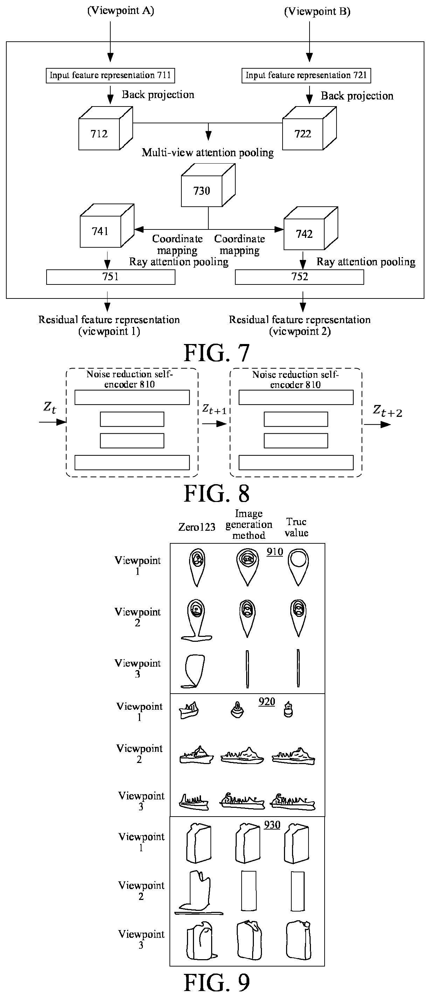

In some embodiments, the attention pooling layer is further described. FIG. 7 is a schematic diagram of an internal structure of a pooling layer of an attention mechanism.

Illustration is provided with two viewing angles (the viewing angle A and the viewing angle B) of the plurality of viewing angles as an example. A current input feature representation of an encoding network layer corresponding to the viewing angle A is an input feature representation 711. A current input feature representation of an encoding network layer corresponding to the viewing angle B is an input feature representation 721. A correspondence exists between the two encoding network layers.

The input feature representation 711 at the viewing angle A and the input feature representation 721 at the viewing angle B are back-projected separately, such that a three-dimensional transformation matrix 712 corresponding to the input feature representation 711 is obtained, and a three-dimensional transformation matrix 722 corresponding to the input feature representation 721 is obtained.

In addition, attention pooling is performed on the three-dimensional transformation matrix 712 and the three-dimensional transformation matrix 722, and a volume feature representation 730 is obtained. The volume feature representation is configured for representing the three-dimensional common information shared by the plurality of three-dimensional transformation matrices.

Operation 550: Adjust the plurality of input feature representations based on the three-dimensional common information, and obtain the plurality of adjusted feature representations.

The correspondence exists between the plurality of input feature representations and the plurality of adjusted feature representations.

In some embodiments, as shown in FIG. 7, after the volume feature representation 730 representing the three-dimensional common information shared by the plurality of three-dimensional transformation matrices is obtained, coordinate mapping is performed on the volume feature representation 730 to map the volume feature representation 730 to the camera coordinate system at the corresponding viewing angle. Thus, a coordinate feature representation 741 corresponding to the viewing angle A and a coordinate feature representation 742 corresponding to the viewing angle B are obtained.

In addition, the coordinate feature representation 741 and the coordinate feature representation 742 are subjected to a ray attention pooling operation, and a three-dimensional feature representation 751 corresponding to the viewing angle A and a three-dimensional feature representation 752 corresponding to the viewing angle B are obtained. Further, a residual feature representation corresponding to the viewing angle A is outputted based on the three-dimensional feature representation 751, and a residual feature representation corresponding to the viewing angle B is outputted based on the three-dimensional feature representation 752.

Operation 560: Generate the corresponding images of the entity element at the plurality of viewing angles based on the plurality of adjusted feature representations.

Illustratively, after the plurality of adjusted feature representations corresponding to the plurality of input feature representations are obtained, the input feature representations are replaced with the adjusted feature representations, and the adjusted feature representations are input into the denoising network layers corresponding to the input feature representations. Thus, the denoising network layers perform feature size transformation and/or denoising on the adjusted feature representations including the three-dimensional common information, and a problem of lack of correlation when independent analysis is performed through the denoising network layers corresponding to different viewing angles is prevented.

The plurality of images are integrated to generate the three-dimensional model representing the entity element.

Illustratively, the plurality of images are image contents presenting the entity element at different viewing angles. After the plurality of images are obtained, the plurality of images are processed through a preset program, such that the plurality of images are integrated to generate the three-dimensional model representing the entity element. The three-dimensional model can present the entity element at the plurality of viewing angles, and attribute information such as a shape and a structure of the three-dimensional model conforms to the plurality of images.

In one exemplary embodiment, adjusted feature representations of an n-th denoising network layer corresponding to the plurality of viewing angles are denoised, and input feature representations of an (n+1)-th denoising network layer corresponding to the plurality of viewing angles are obtained, where

n is a positive integer not greater than m. Illustratively, based on the process of obtaining the adjusted feature representations, after the adjusted feature representation obtained after an input feature representation of the n-th denoising network layer is adjusted is obtained, the adjusted feature representation is denoised through the n-th denoising network layer, such that an input feature representation that is to be input into the (n+1)-th denoising network layer is obtained.

In some embodiments, in response to passing an m-th denoising network layer, denoising feature representations outputted by the m-th denoising network layer corresponding to the plurality of viewing angles are obtained.

Illustratively, the m-th denoising network layer is a last denoising network layer. After an adjusted feature representation obtained after an input feature representation corresponding to the m-th denoising network layer is adjusted passes the m-th denoising network layer, the denoising feature representation is obtained. The plurality of viewing angles participate in the above process. Thus, the denoising feature representations outputted by the m-th denoising network layer corresponding to the plurality of viewing angles can be obtained.

Illustratively, as shown in FIG. 6, after the m-th denoising network layer is passed, the denoising feature representations outputted by the m-th denoising network layer corresponding to the plurality of viewing angles are obtained, such that $z_t$ is denoised to obtain $z_{t+1}$. When a denoising process is skipped, $z_t$ denotes a noise feature representation. When a denoising process is performed, $z_t$ denotes a noise feature representation of an intermediate layer, and $z_{t+1}$ denotes a denoising feature representation, and is a noise feature representation, that is to be subjected to a next iterative denoising process, of an intermediate layer. After $z_{t+1}$ is used as a noise feature representation, $z_{t+2}$ denotes a denoising feature representation obtained based on $z_{t+1}$.

In some embodiments, iterative denoising is performed on the denoising feature representations at the plurality of viewing angles until a quantity of iterations is reached, and decoding feature representations corresponding to the plurality of viewing angles are obtained.

Illustratively, an iterative denoising process is performed on the denoising feature representation corresponding to each of the viewing angles through the denoising process, and the decoding feature representation is obtained after the quantity of iterations is reached.

The decoding feature representations are configured for representing feature representations obtained after the noise feature representations are denoised.

In some embodiments, the plurality of decoding feature representations are processed through decoders, and the corresponding images of the entity element at the plurality of viewing angles are generated.

Illustratively, the decoders are decoding layers configured in the image generation models corresponding to the viewing angles, and can decode the decoding feature representations, such that the images corresponding to the viewing angles are generated. Or, the decoders are decoding layers except the image generation models, and can decode the decoding feature representations, such that the images corresponding to the viewing angles are generated.

In conclusion, in the embodiments of the present disclosure, a process of denoising the noise feature representations at the plurality of viewing angles with the image generation data as the guiding condition of denoising is described. The image generation data is used as the denoising condition, to guide the adjustment mode in the process of denoising the noise feature representations. The input feature representations are replaced with the adjusted feature representations, and denoising is performed through the denoising network layers. When there are the plurality of denoising network layers, denoising may be performed through the plurality of denoising network layers in sequence, such that the corresponding images of the entity element at the plurality of viewing angles are generated, further the three-dimensional model having higher consistency and a higher viewing angle correlation is obtained, and generation authenticity of the three-dimensional model is improved.

In one exemplary embodiment, the method for generating a three-dimensional model is referred to as a method for "constructing a 3D consistent multi-vision generation diffusion model through an attention mechanism of a multi-view dimension and a depth dimension". The denoising process is performed and implemented through a stable diffusion model.

Illustratively, improvement is performed based on a diffusion generation model (diffusion model).

Specified text is used as input of a conventional diffusion generation model, and one image satisfying a text description is used as output of the conventional diffusion generation model. As shown in FIG. 8, a core of a conventional diffusion model is one noise reduction self-encoder 810 that is invoked circularly. Its initial input is a Gaussian noise image. The image is closer to a generated image each time after denoising, until noise is completely removed finally, such that an image satisfying the text description input by a user is generated.

The embodiment of the present disclosure is improved based on the conventional diffusion generation model, such that a plurality of diffusion generation models generate a plurality of images of one object at different angles satisfying the text description in parallel through text input. Each of the diffusion models generates an image at one viewpoint (viewing angle), and the images have geometric consistency, as shown in FIG. 6.

In the model structure shown in FIG. 6, the noise reduction self-encoders are invoked in parallel to generate the images at a plurality of viewpoints. To ensure image consistency, a pooling module (such as AtnPool) of the attention mechanism is added. Its input is feature images (the input feature representations) of decoder parts of the noise reduction self-encoders at all the viewpoints, and its output is residual feature representations of the images. The residual feature representations are added back to the input feature representations, such that the noise reduction self-encoders at all the viewpoints have three-dimensional consistency.

Illustratively, a core of the method for generating a three-dimensional model is to insert one module based on multi-view three-dimensional expression into a plurality of parallel conventional diffusion generation model pipelines. The module may be referred to as the pooling module of the attention mechanism (i.e., the pooling layer of the attention mechanism), and mutual consistency is ensured through the pooling module of the attention mechanism.

A feature image (the input feature representation) of each of the diffusion models is used as input of the pooling module of the attention mechanism. The pooling module projects feature images at different viewpoints to the three-dimensional space, and integrates the feature images into a unified feature volume expression (volume feature representation) through the attention mechanism. Then, the expression is re-projected to each of the viewpoints through the attention mechanism, and consistent residual errors (the residual feature representations) of the feature images are outputted.

FIG. 7 is a schematic diagram of an internal structure of a pooling layer of an attention mechanism.

A feature image (i.e., the input feature representation) of the noise reduction self-encoder at each of the viewpoints is used as input of the pooling layer of the attention mechanism. Firstly, the feature image is projected back to the 3D space through back projection, and the input feature representations on the two-dimensional scale are changed into feature volume expressions (i.e., the three-dimensional transformation matrices) on the three-dimensional scale. Then, feature volumes at all the viewpoints are normalized into a unified feature volume expression on a multi-view dimension through an attention pooling mechanism (that is, the volume feature representation representing the three-dimensional common information is obtained). Then, the unified volume feature representation is re-mapped back to a coordinate system (i.e., the camera coordinate system corresponding to the viewing angle) of each of the viewpoints through coordinate mapping. Then, 3D feature volumes (the volume feature representation) are re-projected back to two-dimensional (2D) feature images (i.e., the coordinate feature representations) through an attention pooling mechanism in a depth dimension of projection. A final output is one feature residual image (the residual feature representation) having the same size as the input.

In one embodiment, a process of "multi-view attention pooling" and a process of "ray attention pooling" as shown in FIG. 7 are described as follows.

(1) Multi-view attention pooling

Illustratively, for a generation task of N viewpoints, viewpoint labels are recorded as $i = 1 \cdots N$. N feature images (input feature representations) are used as input of a multi-view attention pooling module. Each of the feature images is a feature image of a decoder part of a noise reduction self-encoder. A feature image of a viewpoint i is recorded as $m_i$. Firstly, the feature image is back-projected to a three-dimensional transformation matrix $v_i$ in the three-dimensional space, as shown in the formula one.

Then, through an attention pooling mechanism, volume expressions of the N viewpoints are unified into one volume expression, i.e., the volume feature representation $\bar{v}[x]$, as shown in the formula two.

In a pooling layer of an attention mechanism, in a training process, parameters that may be optimized are parameters of an attention layer.

(2) Ray attention pooling

Illustratively, herein, the unified volume feature representation $\bar{v}$ needs to be projected back to the feature image (for example, the residual feature representation), such that feature information having three-dimensional geometric consistency is recorded in the back-projected feature image. The feature image $m_i$ (the input feature representation) input by each of the viewpoints is added back in a form of residual errors, and the denoising feature representation is obtained.

Firstly, the volume feature representation $\bar{v}$ is subjected to coordinate mapping, and a difference value is converted into the volume expression $\bar{v}_i$ under camera coordinates corresponding to each of the viewpoints, which is the three-dimensional feature representation as shown in the formula three.

Then, each three-dimensional feature representation $\bar{v}_i$ is projected to a 2D feature image $\bar{m}_i$ through ray attention pooling, as shown in the formula four.

In one embodiment, $\bar{m}_i$ is to be converted into the residual feature representation having the same feature size as the input feature representation $m_i$ through one MLP, and added back to the input feature representation corresponding to the noise reduction self-encoder.

Initial parameter values of the multilayer perceptron (MLP) are all set to zero.

In the ray attention pooling process, during training, parameters that may be optimized are parameters of the attention layer and parameters of the MLP.

In some embodiments, the training process is briefly described. With one diffusion model corresponding to each of the viewing angles as the image generation model as an example, similar to the conventional diffusion model, when training is performed for the diffusion model corresponding to each of the viewing angles, training is performed through an image of each of the viewpoints and relatively independent noise.

Illustratively, the essence of the training process of the diffusion model is as follows: after a source image P is subjected to noise, a denoising process is performed through a potential space in the diffusion model, and a target image P' is obtained after denoising. A difference between the source image P and the target image P' is compared, such that the diffusion model is trained.

As shown in FIG. 8, in the diffusion model, the noise reduction self-encoder 810 is circularly invoked, such that a conventional diffusion model performs denoising based on input feature representations, and continuously removes noise in the input feature representations until an image satisfying a text description input by a user is generated. In the process shown in FIG. 6 provided in the embodiment of the present disclosure, although a process of circularly invoking the noise reduction self-encoder exists, the denoising process is a denoising process performed based on the adjusted feature representations obtained after the input feature representations are adjusted, and the adjusted feature representations have higher geometric consistency. The noise in the adjusted feature representations is continuously removed, until an image satisfying a text description input by a user is generated.

In one embodiment, model parameters in the diffusion model may be selectively fixed, and only the model parameters described above are trained. For example, for a multi-view attention pooling process, only parameters of the attention layer are optimized. For ray attention pooling, only parameters of the attention layer and/or parameters of the MLP are optimized.

An optimization target of the diffusion model is still estimation of noise added in each operation, and is indifferent from that of conventional diffusion models. Because noise added to a source image at each of the viewpoints is independent, during training, the attention pooling module at each of the viewpoints may be trained independently, thus saving video memory.

During summarization in a model training process, the noise added to the source image of each of the viewpoints may be the same or not, which is not limited herein.

In some embodiments, through small data sets and simple training (for example, several hundred to several thousand times of iterative training), generators at different viewpoints satisfy geometric consistency.

Illustratively, as shown in FIG. 9, a result of generating a three-dimensional model through the method for generating a three-dimensional model in the solution is compared with a generation result of Zero 123 in the related art.

Illustration is provided at three viewing angles (viewpoints), which are a viewpoint 1, a viewpoint 2, and a viewpoint 3.

In a region 910 shown in FIG. 9, the entity element is an identification symbol, and the identification symbol is a three-dimensional element. Compared with a true value, in results generated through Zero123 in the related art, the viewpoint 1 and the viewpoint 2 have some similarity, and the viewpoint 3 is completely distorted. In comparison, when the method for generating a three-dimensional model in the solution is used, the viewpoint 1, the viewpoint 2 and the viewpoint 3 are all highly similar to the true value, such that a more accurate three-dimensional model can be restored.

Similarly, in a region 920 shown in FIG. 9, the entity element is a ship, and the ship is a three-dimensional element. Compared with a true value, in results generated through Zero123 in the related art, the viewpoint 1, the viewpoint 2 and the viewpoint 3 can roughly restore a shape of the ship, and are significantly different from the true value. In comparison, when the method for generating a three-dimensional model in the solution is used, the viewpoint 1, the viewpoint 2 and the viewpoint 3 are all highly similar to the true value, such that a more accurate three-dimensional model can be restored.

Similarly, in a region 930 shown in FIG. 9, the entity element is an oil drum, and the oil drum is a three-dimensional element. Compared with a true value, in results generated through Zero123 in the related art, the viewpoint 1 has some similarity, and the viewpoint 2 and the viewpoint 3 are still significantly different from the true value. In comparison, when the method for generating a three-dimensional model in the solution is used, the viewpoint 1, the viewpoint 2 and the viewpoint 3 are all highly similar to the true value, such that a more accurate three-dimensional model can be restored.

That is, with reference to the true value, results obtained through the method for generating a three-dimensional model in the solution are compared with the results obtained through Zero123, which indicates that 3D consistency and material consistency of multi-views are significantly improved.

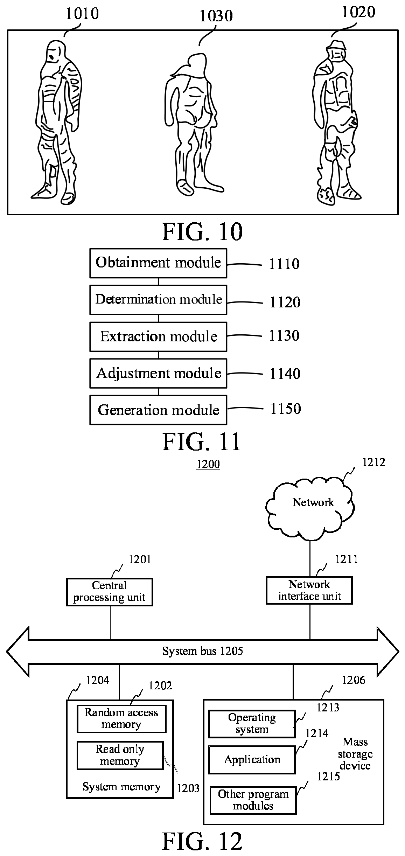

In some embodiments, as shown in FIG. 10, the entity element is a virtual warrior. An input image 1010 is used as the image generation data, that is, the input image 1010 is used as the denoising condition, and after processing is performed through the image generation method, a image 1020 of another viewing angle is obtained. After processing is performed through a Zero123 method, a image 1030 having the same viewing angle as the image 1020 is obtained. Clearly, the image predicted through the Zero123 method significantly differs from the input image 1010.

The above descriptions are merely illustrative examples, and are not limited by the embodiments of the present disclosure.

In conclusion, through overall analysis of the plurality of input feature representations, same information of the plurality of input feature representations on a three-dimensional scale can be obtained, such that the three-dimensional common information can be extracted. Representation of the input feature representations is constrained through the three-dimensional common information, such that separation caused by independent denoising at different viewing angles through the corresponding denoising network layers is avoided. The input feature representations are adjusted through the three-dimensional common information, which is conducive to improvement in correlation between different viewing angles in a denoising process, such that a strong correlation exists between the images. In this way, the plurality of images are favorably integrated to generate the three-dimensional model having higher geometric consistency, and authenticity and details of representing the entity element through the three-dimensional model are improved.

FIG. 11 is a structural block diagram of an apparatus for generating a three-dimensional model according to one exemplary embodiment of the present disclosure. As shown in FIG. 11, the apparatus includes the following parts:

an obtainment module 1110, configured to obtain one or more noise feature representations corresponding to noise data, the noise feature representations being configured for being denoised at a plurality of viewing angles, to obtain corresponding images of an entity element at the plurality of viewing angles;

a determination module 1120, configured to determine input feature representations of denoising network layers corresponding to the plurality of viewing angles when the denoising network layers corresponding to the plurality of viewing angles denoise the noise feature representations, the input feature representations being feature representations input into the denoising network layers;

an extraction module 1130, configured to obtain three-dimensional common information shared by three-dimensional transformation matrices corresponding to the plurality of input feature representations, the three-dimensional transformation matrices being matrices obtained through dimension transformation of the input feature representations;

an adjustment module 1140, configured to adjust the plurality of input feature representations based on the three-dimensional common information, and obtain a plurality of adjusted feature representations, a correspondence existing between the plurality of input feature representations and the plurality of adjusted feature representations; and

a generation module 1150, configured to generate the corresponding images of the entity element at the plurality of viewing angles based on the plurality of adjusted feature representations, the plurality of images being configured for being integrated to generate the three-dimensional model representing the entity element.

In one exemplary embodiment, the determination module 1120 is further configured to obtain image generation data, where the image generation data is data collected for the entity element, and the image generation data is configured for describing the entity element; and determine the input feature representations of the denoising network layers corresponding to the plurality of viewing angles with the image generation data as a denoising condition. The denoising condition is configured for determining a noise prediction situation when noise reduction is performed on the noise feature representations.

In one exemplary embodiment, the determination module 1120 is further configured to obtain at least one piece of image data collected for the entity element as the image generation data, where the image data is an image collected for the entity element at a preset viewing angle; or, obtain text data configured for describing the entity element as the image generation data.

In one exemplary embodiment, the extraction module 1130 is further configured to back-project the plurality of input feature representations separately, and obtain the three-dimensional transformation matrices corresponding to the plurality of input feature representations; and perform attention pooling on the plurality of three-dimensional transformation matrices, and obtain a volume feature representation. The volume feature representation is configured for representing the three-dimensional common information shared by the plurality of three-dimensional transformation matrices.

In one exemplary embodiment, the extraction module 1130 is further configured to back-project the plurality of input feature representations separately, and obtain projection feature representations corresponding to the plurality of viewing angles; obtain parameter feature representations corresponding to the plurality of viewing angles, where the parameter feature representations are feature representations obtained based on camera parameters corresponding to the viewing angles, the parameter feature representations are configured for representing space information at the viewing angles, and a correspondence exists between the plurality of parameter feature representations and the plurality of projection feature representations; and concatenate the projection feature representation and the parameter feature representation at the same viewing angle based on the correspondence, and obtain the three-dimensional transformation matrices corresponding to the plurality of input feature representations.

In one exemplary embodiment, the extraction module 1130 is further configured to obtain the camera parameters corresponding to the plurality of viewing angles, where the camera parameters include a camera position and a camera direction, the camera position is configured for representing a position of a camera relative to the entity element in a world coordinate system, and the camera direction represents a photographing direction of the camera relative to the entity element in the world coordinate system; obtain parameter volume expressions corresponding to the plurality of camera parameters, where the parameter volume expressions are feature representations obtained by expressing the camera parameters in a three-dimensional space, the parameter volume expressions include a viewing angle direction and a viewing angle depth, the viewing angle direction is determined based on a direction of a voxel relative to a camera center in the three-dimensional space, and the viewing angle depth is determined based on a distance between the voxel and the camera center; and encode the parameter volume expressions through a preset feature encoding function, and obtain the parameter feature representations corresponding to the plurality of viewing angles.

In one exemplary embodiment, the extraction module 1130 is further configured to determine voxel sets represented by the plurality of three-dimensional transformation matrices respectively, where the voxel sets are configured for representing sets of a plurality of voxels in the three-dimensional space when the three-dimensional transformation matrices are obtained; determine a plurality of attention values based on a plurality of voxels at same voxel positions in the plurality of voxel sets; and perform pooling on the plurality of attention values, and obtain the volume feature representation.

In one exemplary embodiment, the adjustment module 1140 is further configured to obtain the volume feature representation representing the three-dimensional common information; obtain three-dimensional feature representations corresponding to the plurality of viewing angles based on the viewing angles corresponding to the plurality of input feature representations and the volume feature representation, where the three-dimensional feature representations are configured for representing space dimension influence of the volume feature representation on the input feature representations, and a correspondence exists between the plurality of three-dimensional feature representations and the plurality of input feature representations; and obtain the plurality of adjusted feature representations based on the correspondence through the three-dimensional feature representation and the input feature representation at the same viewing angle.

In one exemplary embodiment, the adjustment module 1140 is further configured to determine camera coordinate systems corresponding to the plurality of viewing angles, where the camera coordinate systems are coordinate systems established with cameras used during determination of the viewing angles as reference points; map the volume feature representation to the three-dimensional space with the camera coordinate systems as reference, and obtain and represent coordinate feature representations corresponding to the plurality of viewing angles; and obtain the three-dimensional feature representations corresponding to the plurality of viewing angles in the three-dimensional space based on the coordinate feature representations corresponding to the plurality of viewing angles.

In one exemplary embodiment, the adjustment module 1140 is further configured to obtain viewing angle depths represented by the plurality of viewing angles respectively; and obtain the three-dimensional feature representations corresponding to the plurality of viewing angles in the three-dimensional space based on the viewing angle depth and the coordinate feature representation at the same viewing angle.

In one exemplary embodiment, the adjustment module 1140 is further configured to determine the voxel sets represented by the three-dimensional transformation matrices corresponding to the plurality of viewing angles, where the voxel sets include a plurality of voxels, and each of the voxels corresponds to one viewing angle depth; fill the plurality of voxels in the voxel sets with the viewing angle depths corresponding to the voxels as voxel values, and obtain voxel block sets having the same voxel value; and obtain the three-dimensional feature representations corresponding to the plurality of viewing angles in the three-dimensional space based on the voxel block sets and the coordinate feature representations.

In one exemplary embodiment, the adjustment module 1140 is further configured to encode the voxel block sets through a preset encoding function, and obtain voxel feature representations; and concatenate the voxel feature representation and the coordinate feature representation at the same viewing angle, and obtain the three-dimensional feature representations corresponding to the plurality of viewing angles in the three-dimensional space.

In one exemplary embodiment, the adjustment module 1140 is further configured to project the three-dimensional feature representations corresponding to the plurality of viewing angles to a two-dimensional space, and obtain residual feature representations corresponding to the plurality of viewing angles; and concatenate the residual feature representation and the input feature representation at the same viewing angle, and obtain the adjusted feature representations corresponding to the plurality of viewing angles.

In one exemplary embodiment, each of the viewing angles corresponds to m denoising network layers, and m is a positive integer.

The adjustment module 1140 is further configured to denoise adjusted feature representations of an n-th denoising network layer corresponding to the plurality of viewing angles, and obtain input feature representations of an (n+1)-th denoising network layer corresponding to the plurality of viewing angles, where n is a positive integer not greater than m; pass an m-th denoising network layer, and obtain denoising feature representations outputted by the m-th denoising network layer corresponding to the plurality of viewing angles; and generate the corresponding images of the entity element at the plurality of viewing angles based on the plurality of denoising feature representations.

In one exemplary embodiment, the adjustment module 1140 is further configured to perform iterative denoising on the denoising feature representations at the plurality of viewing angles until a quantity of iterations is reached, and obtain decoding feature representations corresponding to the plurality of viewing angles, where the decoding feature representations are configured for representing feature representations obtained after the noise feature representations are denoised; and process the plurality of decoding feature representations through a decoder, and generate the corresponding images of the entity element at the plurality of viewing angles.

FIG. 12 is a schematic structural diagram of a server according to one exemplary embodiment of the present disclosure. The server 1200 includes a central processing unit (CPU) 1201, a system memory 1204 including a random access memory (RAM) 1202 and a read only memory (ROM) 1203, and a system bus 1205 connecting the system memory 1204 and the central processing unit 1201. The server 1200 further includes a mass storage device 1206 configured to store an operating system 1213, an application 1214, and other program modules 1215.

The mass storage device 1206 is connected to the central processing unit 1201 through a mass storage controller (not shown in the figure) connected to the system bus 1205. The mass storage device 1206 and an associated computer-readable medium provide non-volatile storage for the server 1200. In other words, the mass storage device 1206 may include a computer-readable media (not shown in the figure) such as a hard disk or a compact disc read only memory (CD-ROM) drive.

Generally, the computer-readable media may include a computer storage medium and a communication medium. The computer storage medium includes volatile and non-volatile media, and removable and non-removable media implemented through any method or technology configured for storing information such as computer-readable instructions, data structures, program modules, or other data. The system memory 1204 and the mass storage device 1206 may be collectively referred to as a memory.

According to the embodiments of the present disclosure, the server 1200 may further be connected, through a network such as the Internet, to a remote computer on the network so as to run. That is, the server 1200 may be connected to a network 1212 through a network interface unit 1211 connected to the system bus 1205, or may be connected to another type of network or a remote computer system (not shown in the figure) through a network interface unit 1211. The memory further includes one or more programs. The one or more programs are stored in the memory and configured to be executed by the CPU.

An embodiment of the present disclosure further provides a computer device. The computer device includes a processor and a memory. The memory stores at least one instruction, at least one segment of program, and a code set or an instruction set. The at least one instruction, the at least one segment of program, and the code set or instruction set are loaded and executed by the processor to implement the method for generating a three-dimensional model according to each of the method embodiments.

An embodiment of the present disclosure further provides a computer-readable storage medium. The computer-readable storage medium stores at least one instruction, at least one segment of program, and a code set or an instruction set. The at least one instruction, the at least one segment of program, and the code set or instruction set are loaded and executed by a processor to implement the method for generating a three-dimensional model according to each of the method embodiments.

An embodiment of the present disclosure further provides a computer program product or a computer program.

The computer program product or computer program includes computer instructions. The computer instructions are stored in a computer-readable storage medium. A processor of a computer device reads the computer instructions from the computer-readable storage medium. The processor executes the computer instructions, such that the computer device is caused to perform the method for generating a three-dimensional model according to any one of the embodiments.

What are described above are merely exemplary embodiments of the present disclosure, and are not intended to limit the present disclosure. Any modification, equivalent replacement, or improvement made within the spirit and principle of the present disclosure shall fall within the protection scope of the present disclosure.

**Claims**

1. A method for generating a three-dimensional model, executable by a computer device, comprising:

    obtaining a noise feature representation of noise data;
    performing, by a plurality of denoising network layers each corresponding to a respective one of a plurality of viewing angles, denoising on the noise feature representation, to determine a plurality of input feature representations;
    adjusting the plurality of input feature representations using three-dimensional common information shared by three-dimensional transformation matrices, to respectively obtain a plurality of adjusted feature representations, wherein the three-dimensional transformation matrices are each obtained through dimension transformation of a corresponding one of the input feature representations; and
    generating a plurality of images of an entity element respectively corresponding to the plurality of viewing angles based on the plurality of adjusted feature representations, and integrating the plurality of images to generate the three-dimensional model representing the entity element.

2. The method according to claim 1, wherein the input feature representations are determined further by:

    obtaining image generation data, the image generation data being data collected for the entity element, and the image generation data being configured for describing the entity element; and
    determining the input feature representations of the denoising network layers corresponding to the plurality of viewing angles with the image generation data as a denoising condition, the denoising condition being configured for determining a noise prediction situation when denoising is is performed on the noise feature representation.

3. The method according to claim 1 or 2, wherein the obtaining image generation data comprises:

    obtaining at least one piece of image data collected for the entity element as the image generation data, the image data being an image collected for the entity element at a preset viewing angle; or,
    obtaining text data configured for describing the entity element as the image generation data.

4. The method according to any one of claims 1 to 3, wherein the three-dimensional common information is obtained by:

    back-projecting the plurality of input feature representations separately, and obtaining the three-dimensional transformation matrices respectively corresponding to the plurality of input feature representations; and
    performing attention pooling on the plurality of three-dimensional transformation matrices, and obtaining a volume feature representation, the volume feature representation being configured for representing the three-dimensional common information shared by the plurality of three-dimensional transformation matrices.

5. The method according to any one of claims 1 to 4, wherein the back-projecting the plurality of input feature representations separately, and obtaining the three-dimensional transformation matrices corresponding to the plurality of input feature representations comprise:

    back-projecting the plurality of input feature representations separately, and obtaining projection feature representations corresponding to the plurality of viewing angles;
    obtaining parameter feature representations corresponding to the plurality of viewing angles, the parameter feature representations being feature representations obtained based on camera parameters corresponding to the viewing angles, the parameter feature representations being configured for representing space information at the viewing angles, and a correspondence existing between the plurality of parameter feature representations and the plurality of projection feature representations; and

concatenating the projection feature representation and the parameter feature representation at a same viewing angle based on the correspondence, and obtaining the three-dimensional transformation matrices corresponding to the plurality of input feature representations.

**6.** The method according to any one of claims 1 to 5, wherein the obtaining parameter feature representations corresponding to the plurality of viewing angles comprises:

obtaining the camera parameters corresponding to the plurality of viewing angles, the camera parameters comprising a camera position and a camera direction, the camera position representing a position of a camera relative to the entity element in a world coordinate system, and the camera direction representing a photographing direction of the camera relative to the entity element in the world coordinate system;

obtaining parameter volume expressions corresponding to the plurality of camera parameters, the parameter volume expressions being feature representations obtained by expressing the camera parameters in a three-dimensional space, the parameter volume expressions comprising a viewing angle direction and a viewing angle depth, the viewing angle direction being determined based on a direction of a voxel relative to a camera center in the three-dimensional space, and the viewing angle depth being determined based on a distance between the voxel and the camera center; and

encoding the parameter volume expressions through a preset feature encoding function, and obtaining the parameter feature representations corresponding to the plurality of viewing angles.

**7.** The method according to any one of claims 1 to 6, wherein the performing attention pooling on the plurality of three-dimensional transformation matrices, and obtaining a volume feature representation comprise:

determining voxel sets represented by the plurality of three-dimensional transformation matrices respectively, the voxel sets representing sets of a plurality of voxels in the three-dimensional space when the three-dimensional transformation matrices are obtained;

determining a plurality of attention values based on a plurality of voxels at same voxel positions in the plurality of voxel sets; and

performing pooling on the plurality of attention values, and obtaining the volume feature representation.

**8.** The method according to any one of claims 1 to 7, wherein the adjusting the plurality of input feature representations using the three-dimensional common information comprises:

obtaining a volume feature representation representing the three-dimensional common information;

obtaining three-dimensional feature representations corresponding to the plurality of viewing angles based on the viewing angles corresponding to the plurality of input feature representations and the volume feature representation, the three-dimensional feature representations representing space dimension influence of the volume feature representation on the input feature representations, and a correspondence existing between the plurality of three-dimensional feature representations and the plurality of input feature representations; and

obtaining the plurality of adjusted feature representations based on the correspondence through the three-dimensional feature representation and the input feature representation at the same viewing angle.

**9.** The method according to any one of claims 1 to 8, wherein the obtaining three-dimensional feature representations corresponding to the plurality of viewing angles based on the viewing angles corresponding to the plurality of input feature representations and the volume feature representation comprises:

determining camera coordinate systems corresponding to the plurality of viewing angles, the camera coordinate systems being coordinate systems established with cameras used during determination of the viewing angles as reference points;

mapping the volume feature representation to the three-dimensional space with the camera coordinate systems as reference, and obtaining and representing coordinate feature representations corresponding to the plurality of viewing angles; and

obtaining the three-dimensional feature representations corresponding to the plurality of viewing angles in the three-dimensional space based on the coordinate feature representations corresponding to the plurality of viewing angles.

**10.** The method according to any one of claims 1 to 9, wherein the obtaining the three-dimensional feature representations corresponding to the plurality of viewing angles in the three-dimensional space based on the coordinate feature representations corresponding to the plurality of viewing angles comprises:

obtaining viewing angle depths represented by the plurality of viewing angles respectively; and
obtaining the three-dimensional feature representations corresponding to the plurality of viewing angles in the three-dimensional space based on the viewing angle depth and the coordinate feature representation at the same viewing angle.

11. The method according to any one of claims 1 to 10, wherein the obtaining the three-dimensional feature representations corresponding to the plurality of viewing angles in the three-dimensional space based on the viewing angle depth and the coordinate feature representation at the same viewing angle comprises:

determining the voxel sets represented by the three-dimensional transformation matrices corresponding to the plurality of viewing angles, the voxel sets comprising a plurality of voxels, and each of the voxels corresponding to one viewing angle depth;
filling the plurality of voxels in the voxel sets with the viewing angle depths corresponding to the voxels as voxel values, and obtaining voxel block sets having a same voxel value; and
obtaining the three-dimensional feature representations corresponding to the plurality of viewing angles in the three-dimensional space based on the voxel block sets and the coordinate feature representations.

12. The method according to any one of claims 1 to 11, wherein the obtaining the three-dimensional feature representations corresponding to the plurality of viewing angles in the three-dimensional space based on the voxel block sets and the coordinate feature representations comprises:

encoding the voxel block sets through a preset encoding function, and obtaining voxel feature representations; and
concatenating the voxel feature representation and the coordinate feature representation at the same viewing angle, and obtaining the three-dimensional feature representations corresponding to the plurality of viewing angles in the three-dimensional space.

13. The method according to any one of claims 1 to 12, wherein the obtaining the plurality of adjusted feature representations based on the correspondence through the three-dimensional feature representation and the input feature representation at the same viewing angle comprises:

projecting the three-dimensional feature representations corresponding to the plurality of viewing angles to a two-dimensional space, and obtaining residual feature representations corresponding to the plurality of viewing angles; and
concatenating the residual feature representation and the input feature representation at the same viewing angle, and obtaining the adjusted feature representations corresponding to the plurality of viewing angles.

14. The method according to any one of claims 1 to 13, wherein each of the viewing angles corresponds to m denoising network layers, and m is a positive integer; and
the generating the images of the entity element respectively corresponding to the plurality of viewing angles based on the plurality of adjusted feature representations comprises: denoising adjusted feature representations of an n-th denoising network layer corresponding to the plurality of viewing angles, and obtaining input feature representations of an (n+1)-th denoising network layer corresponding to the plurality of viewing angles, n being a positive integer not greater than m; passing an m-th denoising network layer, and obtaining denoising feature representations outputted by the m-th denoising network layer corresponding to the plurality of viewing angles; and generating the images of the entity element respectively corresponding to the plurality of viewing angles based on the plurality of denoising feature representations.

15. The method according to any one of claims 1 to 14, wherein the generating the images of the entity element respectively corresponding to the plurality of viewing angles based on the plurality of denoising feature representations comprises: performing iterative denoising on the denoising feature representations at the plurality of viewing angles until a quantity of iterations is reached, and obtaining decoding feature representations corresponding to the plurality of viewing angles, the decoding feature representations representing feature representations obtained after the noise feature representation is denoised; and processing the plurality of decoding feature representations through a decoder, and generating the images of the entity element respectively corresponding to the plurality of viewing angles.

16. An apparatus for generating a three-dimensional model, comprising:

an obtainment module, configured to obtain a noise feature representation of noise data;
a determination module, configured to determine a plurality of input feature representations by performing, by a plurality of denoising network layers each corresponding to a respective one of a plurality of viewing angles, denoising on the noise feature representation;
an extraction module, configured to obtain three-dimensional common information shared by three-dimensional transformation matrices which are each obtained through dimension transformation of a corresponding one of the input feature representations;
an adjustment module, configured to adjust the plurality of input feature representations using the three-dimensional common information, to respectively obtain a plurality of adjusted feature representations; and
a generation module, configured to generate a plurality of images of an entity element respectively corresponding to the plurality of viewing angle based on the plurality of adjusted feature representations, and integrating the plurality of images to generate the three-dimensional model representing the entity element.

17. A computer device, comprising a processor and a memory, the memory storing at least one segment of program, and the at least one segment of program being loaded and executed by the processor to implement the method for generating a three-dimensional model according to any one of claims 1 to 15.

18. A computer-readable storage medium, storing at least one segment of program, the at least one segment of program being loaded and executed by a processor to implement the method for generating a three-dimensional model according to any one of claims 1 to 15.

19. A computer program product, comprising computer instructions, the computer instructions, when executed by a processor, implementing the method for generating a three-dimensional model according to any one of claims 1 to 15.

FIG. 1

Obtain a noise feature representation of noise data — 210

Determine input feature representations of denoising network layers corresponding to a plurality of viewing angles when the denoising network layers corresponding to the plurality of viewing angles denoise the noise feature representation — 220

Extract three-dimensional common information shared by three-dimensional conversion matrices corresponding to the plurality of input feature representations — 230

Adjust the plurality of input feature representations based on the three-dimensional common information, and obtain a plurality of adjusted feature representations — 240

Generate images corresponding viewing angle images of an entity element at the plurality of viewing angles based on the plurality of adjusted feature representations — 250

FIG. 2

Back-project a plurality of input feature representations separately, and obtain three-dimensional conversion matrices corresponding to the plurality of input feature representations — 310

Perform attention pooling on the plurality of three-dimensional conversion matrices, and obtain a volume feature representation — 320

FIG. 3

Obtain a volume feature representation representing
three-dimensional shared information — 410

Obtain three-dimensional feature representations
corresponding to a plurality of viewing angles based on the
viewing angles corresponding to a plurality of input feature
representations and the volume feature representation — 420

Obtain a plurality of adjusted feature representations
based on a correspondence through the three-
dimensional feature representation and the input feature
representation at the same viewing angle — 430

## FIG. 4

Obtain noise adding feature representations
corresponding to noise data — 510

Obtain image generation data — 520

Determine input feature representations of denoising
network layers corresponding to a plurality of viewing
angles with the image generation data as a denoising
condition when the denoising network layers
corresponding to the plurality of viewing angles denoise
the noise adding feature representations — 530

Extract three-dimensional shared information shared by
three-dimensional conversion matrices corresponding to
the plurality of input feature representations — 540

Adjust the plurality of input feature representations
based on the three-dimensional shared information, and
obtain a plurality of adjusted feature representations — 550

Generate corresponding viewing angle images of an
entity element at the plurality of viewing angles based
on the plurality of adjusted feature representations — 560

## FIG. 5

## FIG. 6

(Viewpoint A)       (Viewpoint B)

Input feature representation 711     Input feature representation 721

Back projection      Back projection

712     722

Multi-view attention pooling

730

741     742

Coordinate mapping   Coordinate mapping

Ray attention pooling     Ray attention pooling

751     752

Residual feature representation (viewpoint 1)     Residual feature representation (viewpoint 2)

**FIG. 7**

Noise reduction self-encoder 810     Noise reduction self-encoder 810

$z_t$     $z_{t+1}$     $z_{t+2}$

**FIG. 8**

| | Zero123 | Image generation method | True value |
|---|---|---|---|
| Viewpoint 1 | | | 910 |
| Viewpoint 2 | | | |
| Viewpoint 3 | | | |
| Viewpoint 1 | | | 920 |
| Viewpoint 2 | | | |
| Viewpoint 3 | | | |
| Viewpoint 1 | | | 930 |
| Viewpoint 2 | | | |
| Viewpoint 3 | | | |

**FIG. 9**

1010         1030         1020

## FIG. 10

| | |
|---|---|
| Obtainment module | — 1110 |
| Determination module | — 1120 |
| Extraction module | — 1130 |
| Adjustment module | — 1140 |
| Generation module | — 1150 |

## FIG. 11

1200

Network — 1212

Central processing unit — 1201

Network interface unit — 1211

System bus 1205

Random access memory — 1204 / 1202

Read only memory

System memory — 1203

Operating system — 1213

Application — 1214

Other program modules — 1215

Mass storage device — 1206

## FIG. 12

## INTERNATIONAL SEARCH REPORT

| | International application No. |
|---|---|
| | **PCT/CN2024/105958** |

| **A.** | **CLASSIFICATION OF SUBJECT MATTER** |
|---|---|

G06T 17/00(2006.01)i; G06T 15/00(2011.01)i

According to International Patent Classification (IPC) or to both national classification and IPC

| **B.** | **FIELDS SEARCHED** |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 多视角, 视点, 角度, 三维模型, 去噪, 共享, 关联, 一致性, 约束, multi-view, multiple visual, viewpoint, view, angle, three dimensional model, denoising, share, relevance, association, consistency, constraint

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 117252984 A (TENCENT TECHNOLOGY (SHENZHEN) CO., LTD.) 19 December 2023 (2023-12-19) <br> claims 1-19 | 1-19 |
| A | CN 115937406 A (XIAMEN HOME MEITU TECHNOLOGY CO., LTD.) 07 April 2023 (2023-04-07) <br> description, paragraphs [0005]-[0050] and [0067]-[0093 | 1-19 |
| A | CN 114723880 A (NANJING UNIVERSITY) 08 July 2022 (2022-07-08) <br> entire document | 1-19 |
| A | CN 116681859 A (ZHUHAI JIANXIN INTERACTIVE ENTERTAINMENT CO., LTD.) 01 September 2023 (2023-09-01) <br> entire document | 1-19 |
| A | JP 2018181047 A (TOPPAN PRINTING CO., LTD. et al.) 15 November 2018 (2018-11-15) <br> entire document | 1-19 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **16 October 2024** | **23 October 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/105958**

| Patent document cited in search report | | | Publication date (day/month/year) | Patent family member(s) | | | Publication date (day/month/year) |
|---|---|---|---|---|---|---|---|
| CN | 117252984 | A | 19 December 2023 | None | | | |
| CN | 115937406 | A | 07 April 2023 | None | | | |
| CN | 114723880 | A | 08 July 2022 | None | | | |
| CN | 116681859 | A | 01 September 2023 | None | | | |
| JP | 2018181047 | A | 15 November 2018 | JP | 6934224 | B2 | 15 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311205626